(19) **Europäisches Patentamt European Patent Office Office européen des brevets**

(11) **EP 3 843 417 B1**

(12) **EUROPEAN PATENT SPECIFICATION**

(45) Date of publication and mention
of the grant of the patent:
**03.12.2025 Bulletin 2025/49**

(21) Application number: **19851658.5**

(22) Date of filing: **09.08.2019**

(51) International Patent Classification (IPC):
**H04N 21/2343** *(2011.01)* **H04N 21/2662** *(2011.01)*
**H04N 21/2362** *(2011.01)*

(52) Cooperative Patent Classification (CPC):
**H04N 21/234327; H04N 19/587; H04N 19/85;**
**H04N 21/234345; H04N 21/234381; H04N 21/2362;**
**H04N 21/2662**

(86) International application number:
**PCT/JP2019/031540**

(87) International publication number:
**WO 2020/039973 (27.02.2020 Gazette 2020/09)**

(54) **RECEIVING APPARATUS, RECEIVING METHOD, TRANSMITTING APPARATUS, AND TRANSMITTING METHOD**

EMPFANGSVORRICHTUNG, EMPFANGSVERFAHREN, SENDEVORRICHTUNG UND SENDEVERFAHREN

APPAREIL DE RÉCEPTION, PROCÉDÉ DE RÉCEPTION, APPAREIL DE TRANSMISSION, ET PROCÉDÉ DE TRANSMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2018 JP 2018155026**

(43) Date of publication of application:
**30.06.2021 Bulletin 2021/26**

(73) Proprietor: **Saturn Licensing, LLC New York, NY 10010 (US)**

(72) Inventor: **TSUKAGOSHI, Ikuo Tokyo 108-0075 (JP)**

(74) Representative: **Le Dantec, Claude InterDigital CE Patent Holdings Immeuble ZEN 2 845 A. Avenue des Champs Blancs 35510 Cesson Sévigné (FR)**

(56) References cited:
**EP-A1- 2 731 337          EP-A1- 3 346 710**
**EP-A1- 3 349 456          EP-A1- 3 358 849**
**WO-A1-2015/076277    WO-A1-2017/065128**
**US-A1- 2014 098 886**

• **ANONYMOUS, ATSC STANDARD: VIDEO - HEVC (A/341, 19 May 2017 (2017-05-19), pages 23 - 25, XP055614561, Retrieved from the Internet <URL:https://www.atsc.org/wp-content/uploads/2017/05/A341-2017-Video-HEVC-1.pdf> [retrieved on 20181101]**

EP 3 843 417 B1

**Description**

[Technical Field]

The present technology relates to a reception device, a reception method, a transmission device, and a transmission method, in particular, to a reception device, a reception method, a transmission device, and a transmission method that handle image data subjected to blending processing.

[Background Art]

In a case where a receiver configured to perform decoding at a conventional broadcast frame rate receives a broadcast at a high frame rate, partial decoding of the stream impairs the continuity of the motion and degrades the quality of the moving image. It is said that the degradation of a moving image quality is mainly caused by strobing. The strobing occurs since time continuity between partially decoded pictures is coarse and the retinal projection of human eyes with respect to a quick motion is thus intermittent.

To reduce the degradation of a moving image quality due to strobing, the applicant of the present invention has already proposed the technology of performing pixel blending between a picture in a reference frame period and a previous or subsequent picture thereof (see PTL 1). In this case, even when a receiver in the related art performs time subsampling, moved elements are reflected in time samples to be partially decoded, so that the degradation of the moving image quality due to strobing is reduced. Another technology of performing picture blending is described in PTL 2.

[Citation List]

[Patent Literature]

[PTL 1]
PCT Patent Publication No. WO2015/076277
[PTL 2]
EP 3 358 849 A1

[Summary]

[Technical Problem]

In the related-art technology, since an entire picture is subjected to blending processing, there is a fear that a part that is originally to be clearly displayed is displayed as a double image. It is demanded to separately process parts that are to be prevented from being degraded due to strobing and parts that are to be clear at a high frame rate, to thereby obtain a stable moving image.

It is an object of the present technology to allow a reception side to obtain stable moving images.

[Solution to Problem]

The invention is defined by the appended independent claims and will be more readily understood after reading the following detailed description in conjunction with the accompanying drawings.

[Brief Description of Drawings]

[FIG. 1]

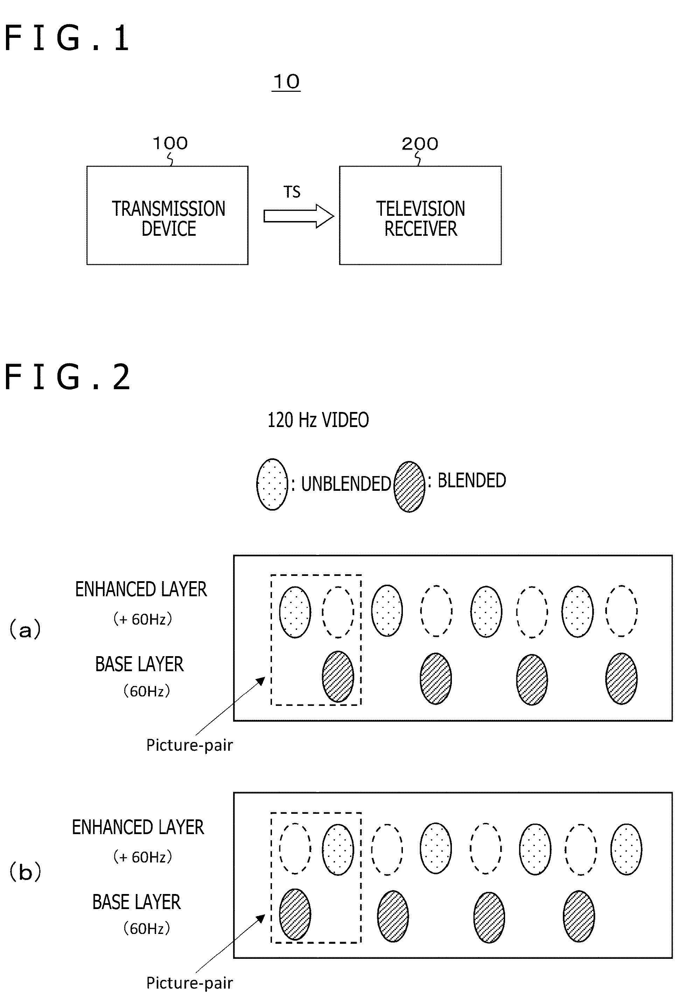

FIG. 1 is a block diagram illustrating a configuration example of a transmission/reception system of an embodiment.
[FIG. 2]
FIG. 2 depicts diagrams of an example of image data on a 60 Hz base layer obtained by performing blending processing on image data at a 120 Hz frame frequency, and of image data on a +60 Hz enhanced layer.
[FIG. 3]

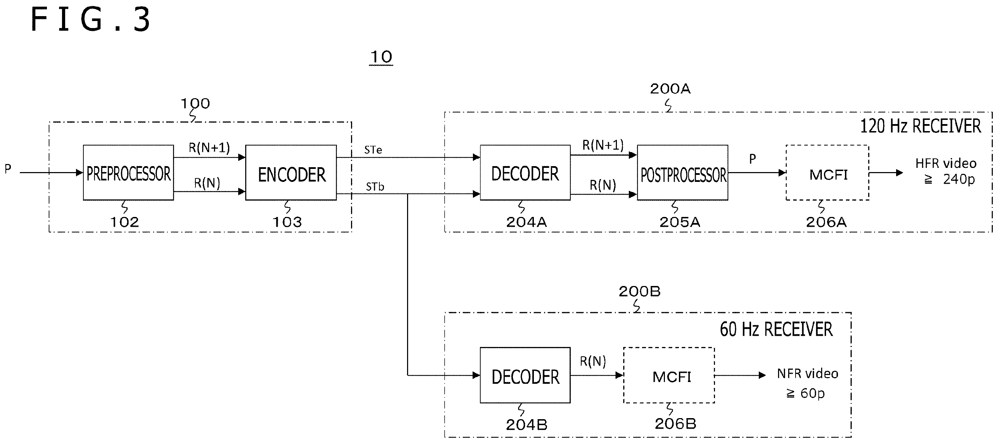

FIG. 3 is a diagram illustrating the outline of processing by a transmission device and television receivers.

[FIG. 4]

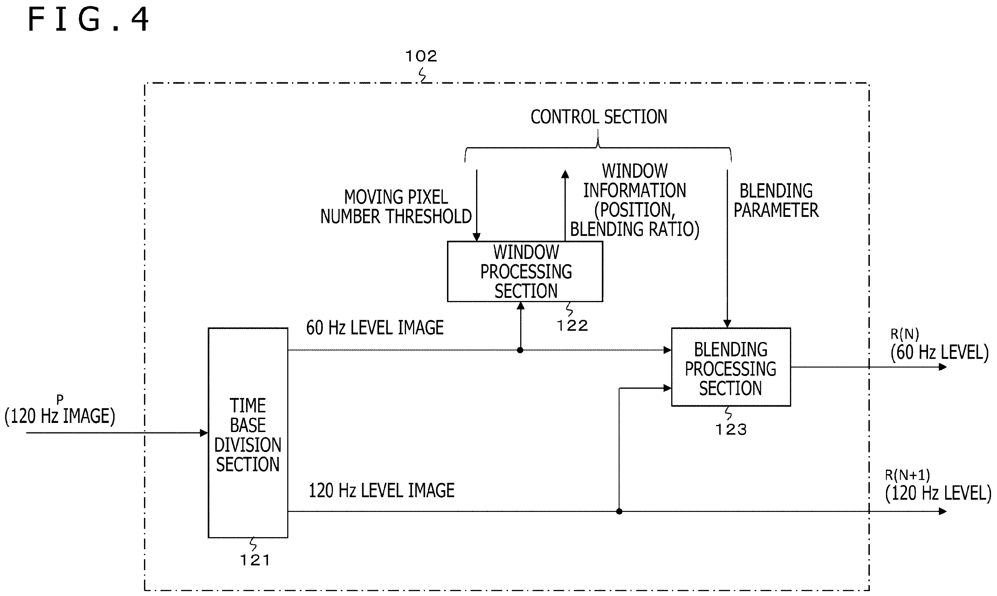

FIG. 4 is a block diagram illustrating a configuration example of a preprocessor of the transmission device.
[FIG. 5]

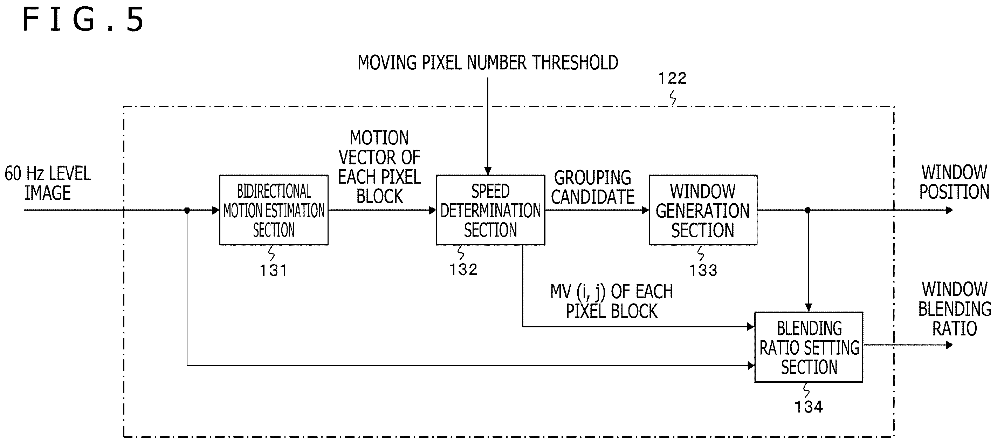

FIG. 5 is a block diagram illustrating a configuration example of a window processing section.
[FIG. 6]

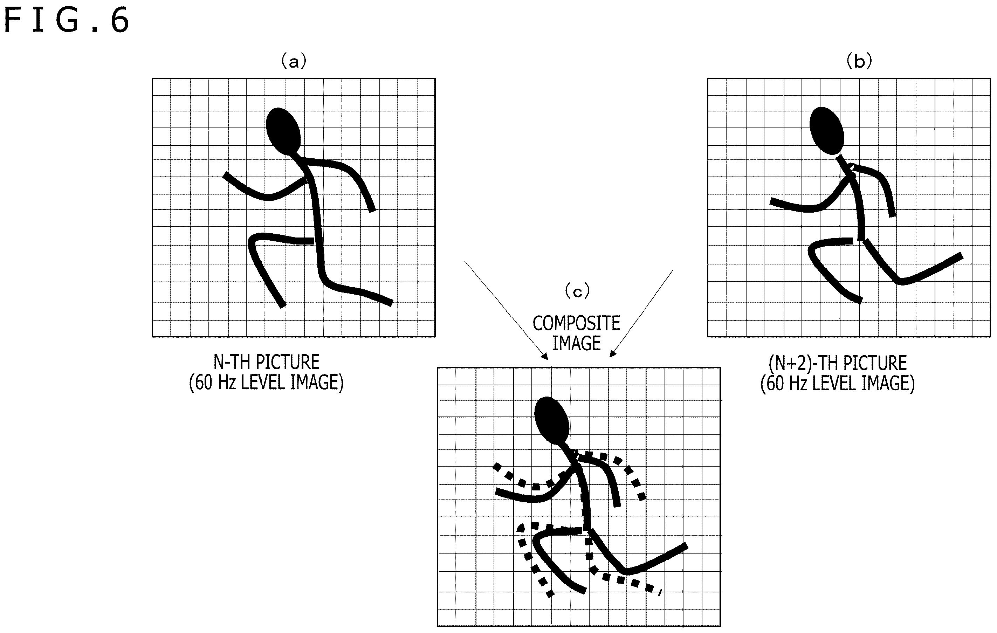

FIG. 6 depicts diagrams of an example of a change in image between a pair of N-th and (N+2)-th pictures.
[FIG. 7]

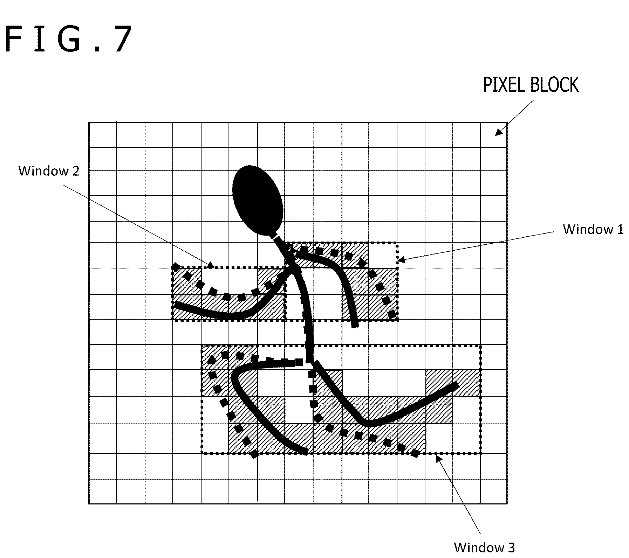

FIG. 7 is a diagram illustrating an example of grouping candidates and window generation.
[FIG. 8]

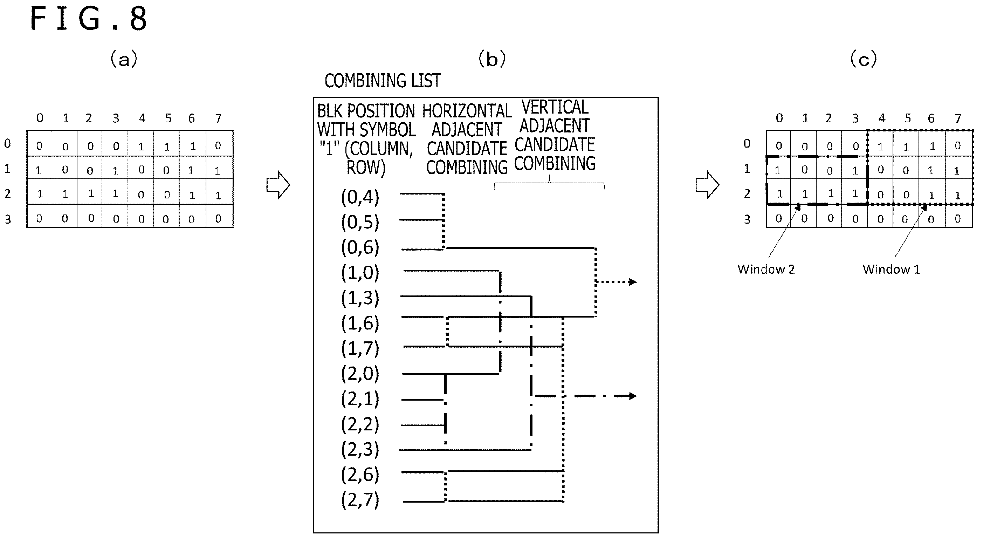

FIG. 8 depicts diagrams of an example of a window generation procedure by a window generation section.
[FIG. 9]

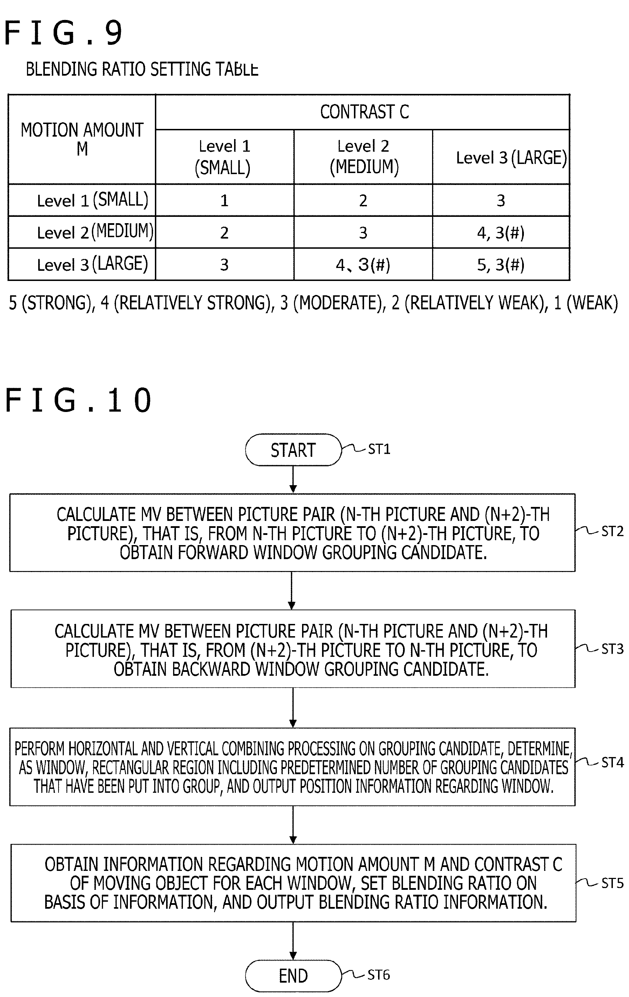

FIG. 9 is a diagram illustrating an example of a table for setting a blending ratio by a blending ratio setting section.
[FIG. 10]
FIG. 10 is a flowchart illustrating an example of a processing procedure that is performed by the window processing section on each picture to acquire windows and blending ratios for the windows.
[FIG. 11]

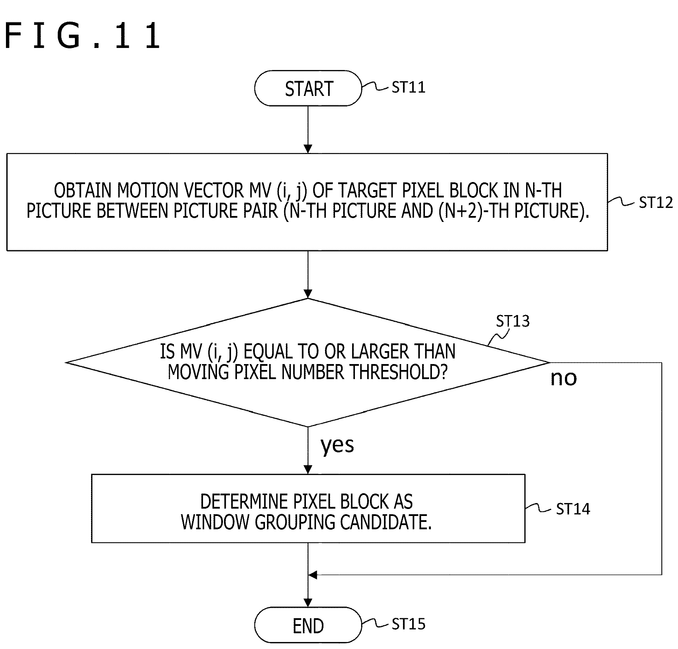

FIG. 11 is a flowchart illustrating an example of a processing procedure for obtaining a grouping candidate.
[FIG. 12]

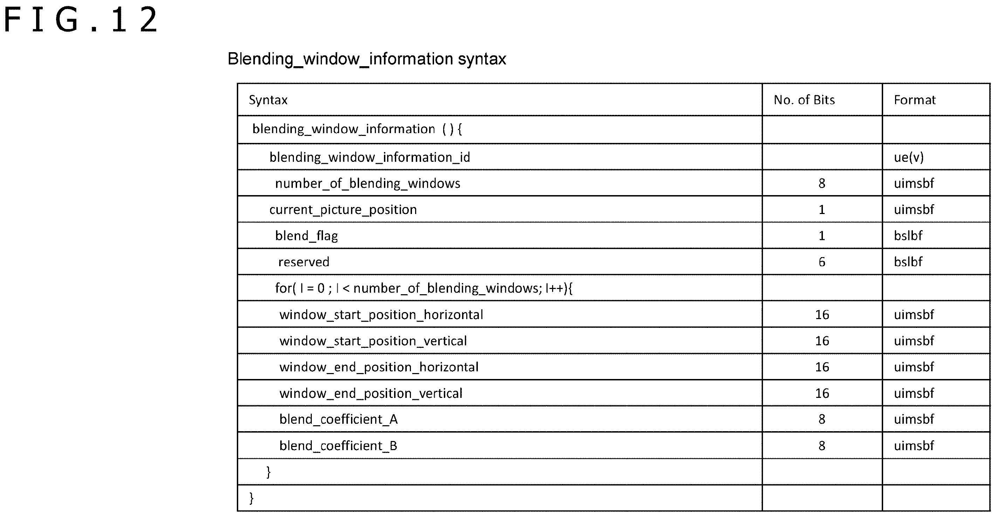

FIG. 12 is a diagram illustrating the syntax of a blending window information SEI message.
[FIG. 13]

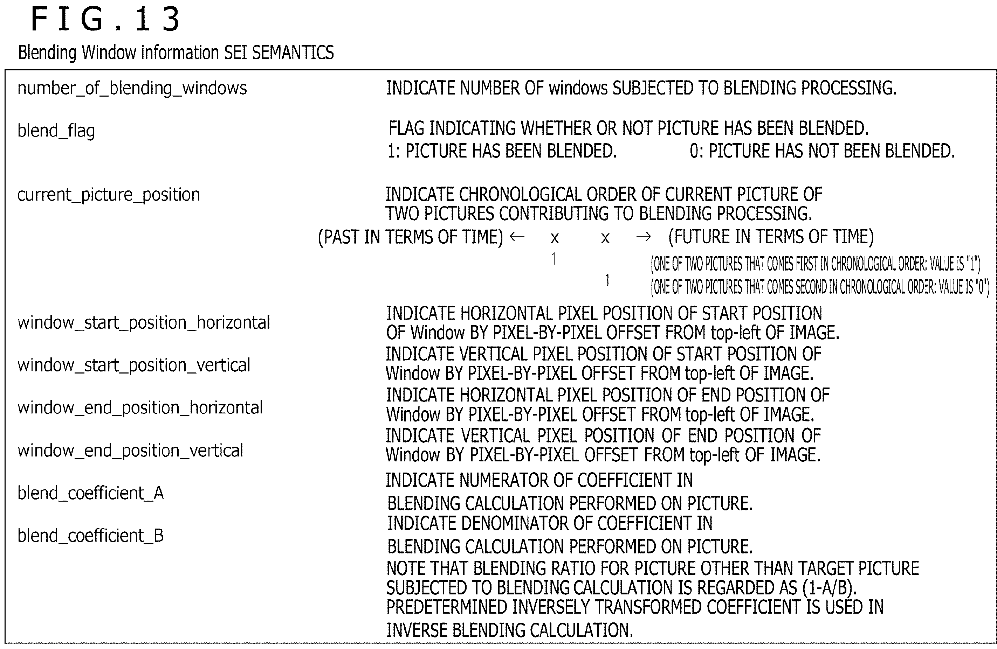

FIG. 13 is a diagram illustrating the semantics of main information regarding the syntax of the blending window information SEI message.
[FIG. 14]

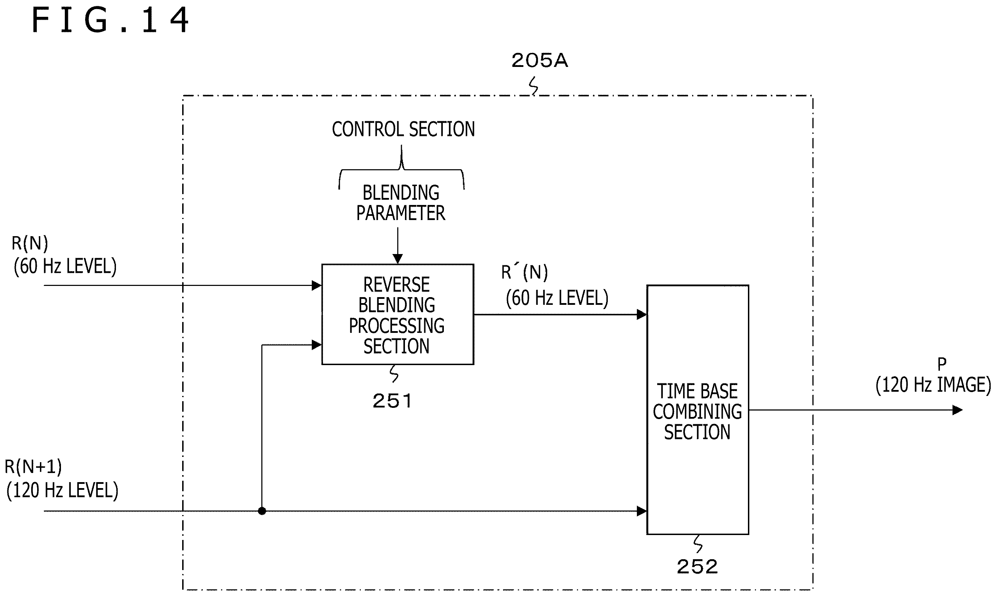

FIG. 14 is a block diagram illustrating a configuration example of a postprocessor.
[FIG. 15]

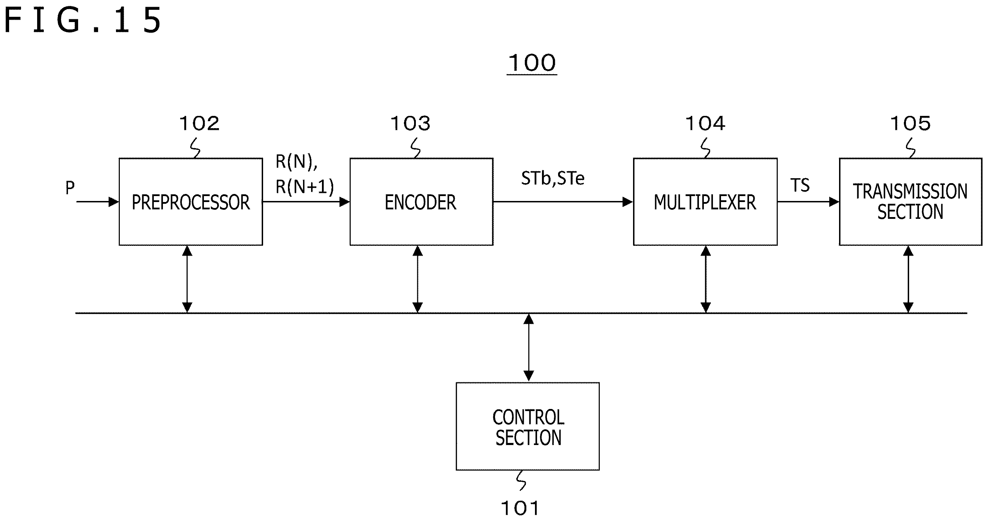

FIG. 15 is a block diagram illustrating a configuration example of the transmission device.
[FIG. 16]

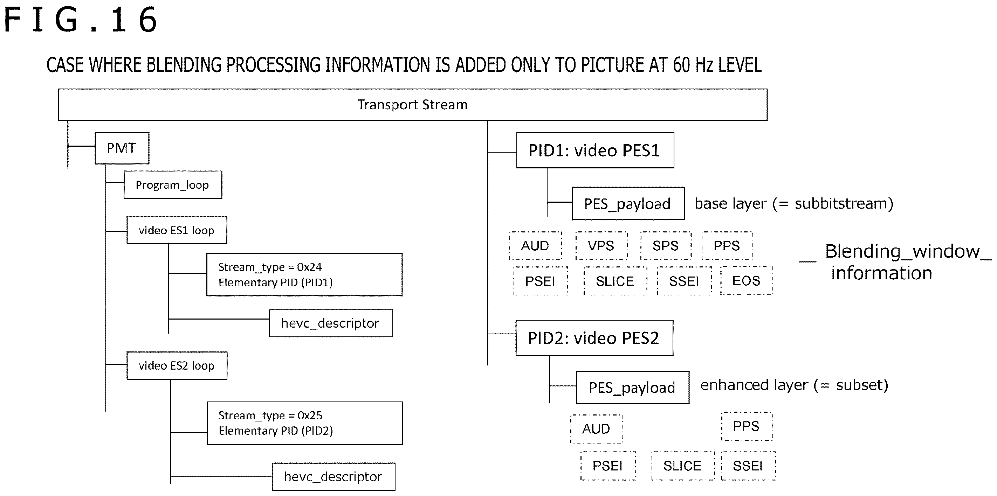

FIG. 16 is a diagram illustrating a configuration example of a transport stream TS in a case where blending processing information is added only to a 60 Hz level picture.
[FIG. 17]

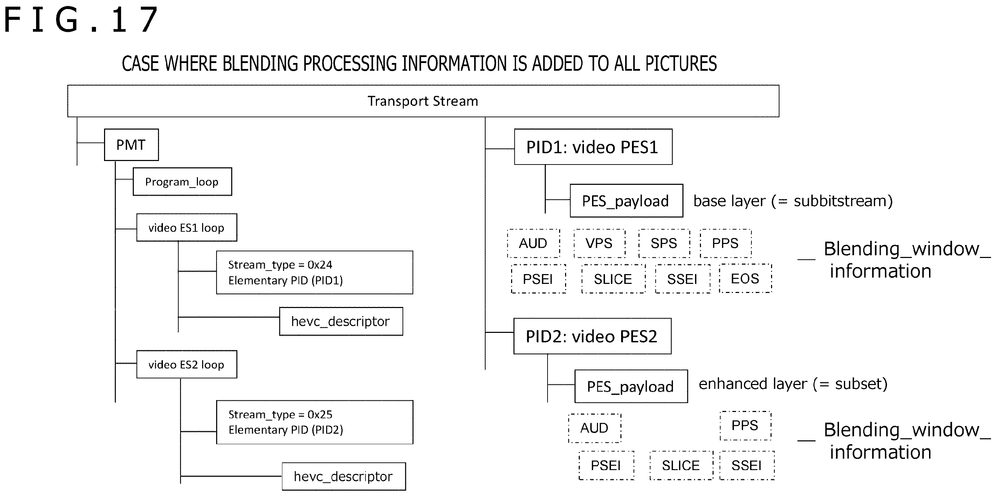

FIG. 17 is a diagram illustrating a configuration example of the transport stream TS in a case where blending processing information is added only to all pictures.
[FIG. 18]

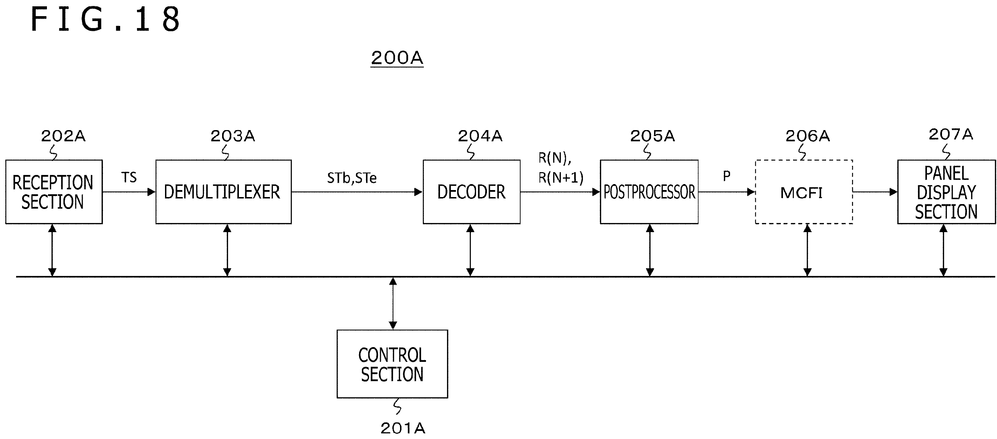

FIG. 18 is a block diagram illustrating a configuration example of the television receiver capable of decoding image data at the 120 Hz frame frequency.
[FIG. 19]

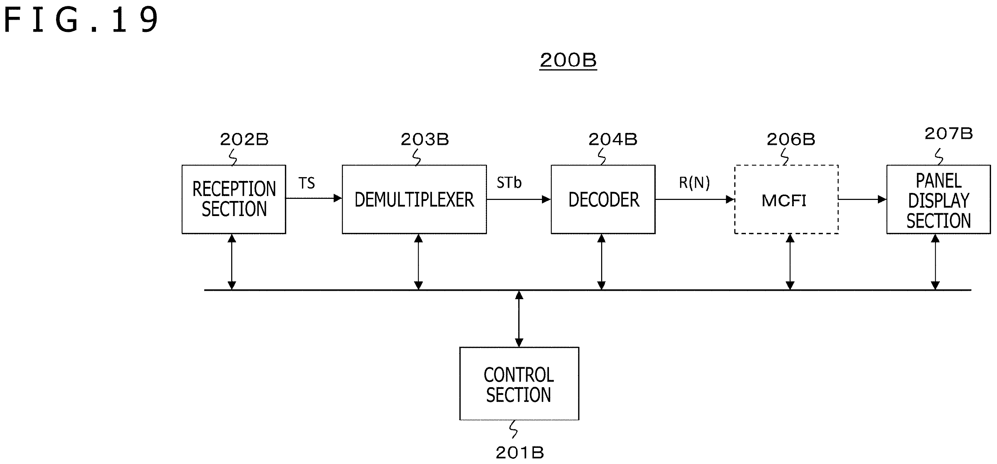

FIG. 19 is a block diagram illustrating a configuration example of the television receiver capable of decoding image data at a 60 Hz frame frequency.
[FIG. 20]

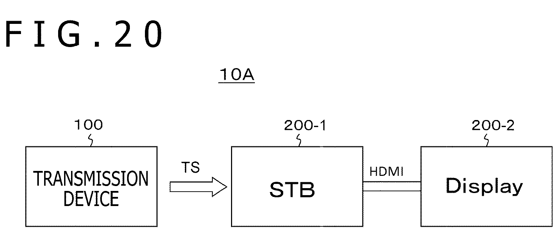

FIG. 20 is a block diagram illustrating another configuration example of the transmission/reception system.
[FIG. 21]

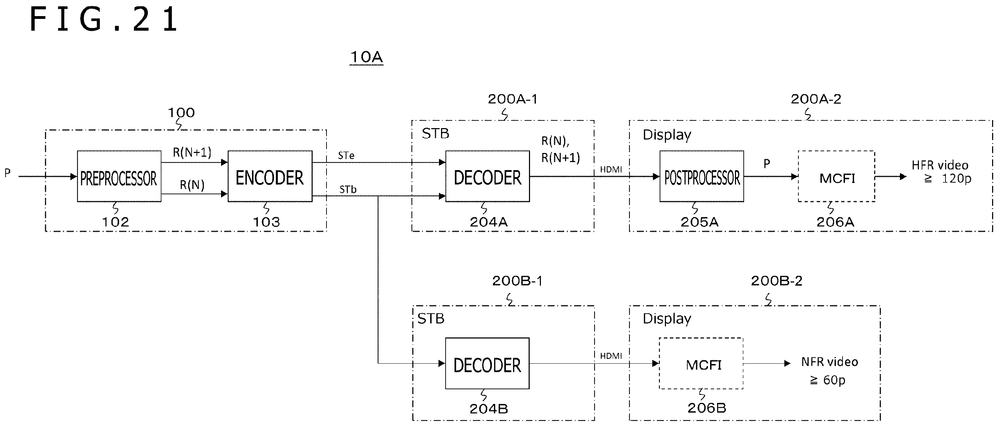

FIG. 21 is a diagram illustrating the outline of processing by the transmission device, a set-top box, and a display.
[FIG. 22]

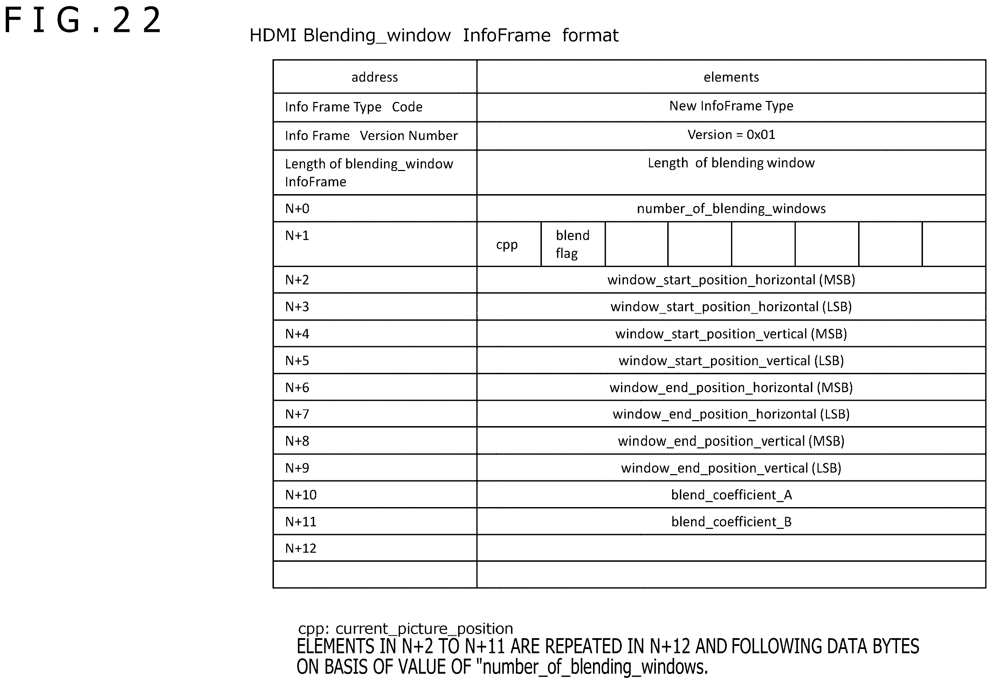

FIG. 22 is a block diagram illustrating the syntax of an HDMI blending window InfoFrame.
[FIG. 23]

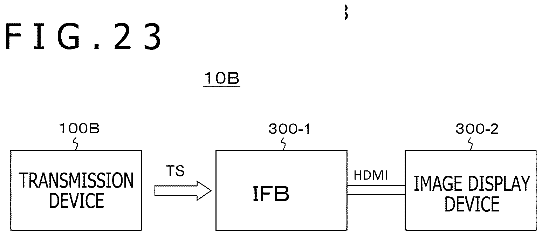

FIG. 23 is a block diagram illustrating another configuration example of the transmission/reception system.
[FIG. 24]

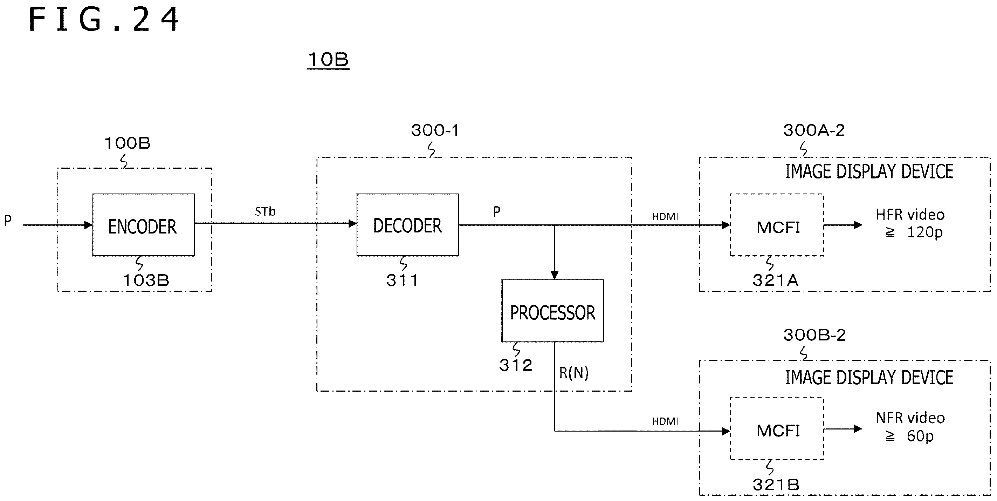

FIG. 24 is a diagram illustrating the outline of processing by a transmission device, an interface box, and an image display device.
[FIG. 25]

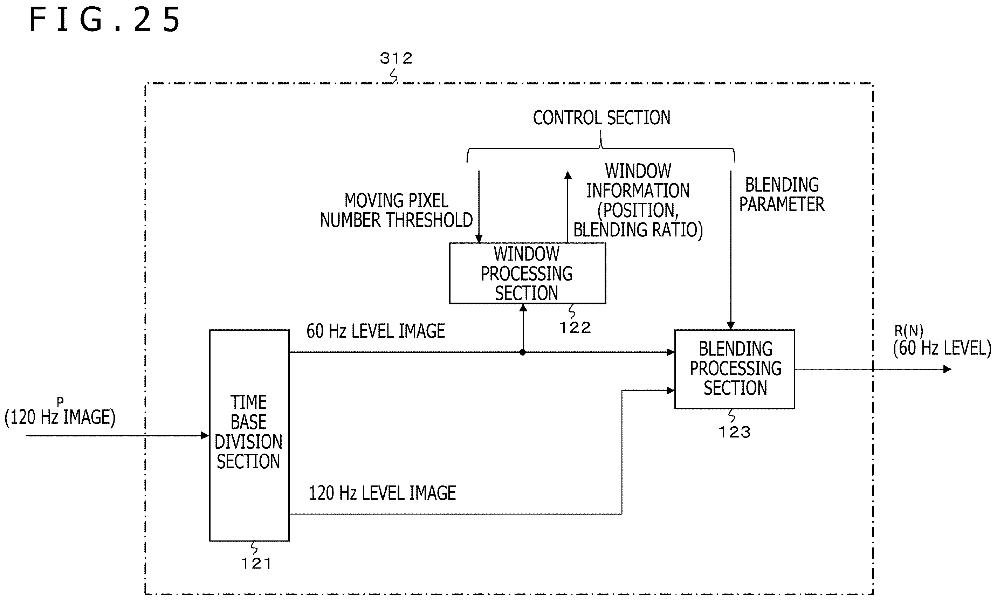

FIG. 25 is a block diagram illustrating a configuration example of a processor.

[Description of Embodiment]

Now, a mode for carrying out the invention (hereinafter referred as an "embodiment") is described. Note that the following items are described in order.

1. Embodiment

2. Modified Example

<1. Embodiment>

[Transmission/reception System]

FIG. 1 illustrates a configuration example of a transmission/reception system 10 of an embodiment. The transmission/reception system 10 includes a transmission device 100 and a television receiver 200.

The transmission device 100 transmits a transport stream TS which serves as a container, on a broadcast wave. The transport stream TS forms the container serving as a multiplexed stream. The transport stream TS includes an encoded stream of a base layer (base stream) obtained from image data (moving image data) at a high frame rate as a predetermined frame rate, that is, 120 Hz in the embodiment, and an encoded stream of an enhanced layer (enhanced stream).

In the embodiment, the base stream and the enhanced stream each have a NAL (Network Abstraction Layer) unit structure. The base stream includes, as an access unit, encoded image data obtained by encoding image data on each picture of the base layer. Further, the enhanced stream includes, as an access unit, encoded image data obtained by encoding image data on each picture of the enhanced layer.

Here, the image data on each picture of the base layer is, within a predetermined window range, image data obtained by blending image data on one of two time-based consecutive pictures in the image data at the 120 Hz frame frequency with image data on the other picture. Outside the predetermined window range, the image data on each picture of the base layer is image data obtained by extracting the image data on the one of the two time-based consecutive pictures. For example, the predetermined window range is an image range including a moving portion equal to or larger than a threshold extracted on the basis of image data on each picture of the image data at the 120 Hz frame frequency that corresponds to the image data on each picture of the base layer. Here, the frame rate of the image data on each picture of the base layer is 60 Hz.

Further, the image data on each picture of the enhanced layer is image data obtained by extracting the image data on the other of the two time-based consecutive pictures. Here, the frame rate of the image data on each picture of the enhanced layer is 60 Hz.

FIG. 2(a) and FIG. 2(b) illustrate an example of image data on a 60 Hz base layer obtained by performing blending processing on image data at the 120 Hz frame frequency, and of image data on a +60 Hz enhanced layer. A picture-pair includes two pictures, namely, one of pictures (frames) of the image data on the base layer and one of pictures (frames) of the image data on the enhanced layer that is adjacent thereto.

In FIG. 2(a), in each picture-pair, the image data on the first picture of the enhanced layer has not been blended (unblended state), but the image data on the following picture of the base layer is, within a predetermined window range, image data blended with the image data on the previous picture of the enhanced layer (blended state). Further, in FIG. 2(b), in each picture-pair, the image data on the first picture of the base layer is, within a predetermined window range, image data blended with the image data on the following picture of the enhanced layer (blended state), but the image data on the following picture of the enhanced layer has not been blended (unblended state). In the following, the embodiment is described on the assumption that each picture-pair basically has the relation illustrated in FIG. 2(a).

Blending processing information is added to at least the image data on each picture of the 60 Hz base layer. In the embodiment, the blending processing information includes, for example, predetermined window range information, blending ratio information for blending processing, and information indicating a time-based relative positional relation between one of two consecutive pictures (picture of enhanced layer) and the other picture (picture of base layer). With this, a reception side can easily and appropriately perform reverse blending processing (separation processing) on the image data on the 60 Hz base layer, on the basis of the blending processing information.

Referring back to FIG. 1, the television receiver 200 receives the above-mentioned transport stream TS transmitted from the transmission device 100 on the broadcast wave. In a case where the reception device 200 is capable of decoding image data at a normal frame rate (60 Hz), the reception device 200 processes only the base stream included in the transport stream TS to obtain image data at the normal frame rate, thereby reproducing the image.

In this case, the television receiver 200 performs in-layer prediction decoding processing on the base stream of the base layer, thereby obtaining the image data on each frame at the normal frame rate. Further, in a case where the television receiver 200 is capable of decoding image data at a high frame rate (120 Hz), the television receiver 200 processes both the base stream and enhanced stream included in the transport stream TS to obtain image data at the high frame rate, thereby reproducing the image. In this case, on the basis of the blending processing information, reverse blending processing is performed, within the predetermined window range, on the image data on each picture of the base layer.

FIG. 3 illustrates the outline of processing by the transmission device 100 and the television receiver 200 (200A and 200B). Note that image sequences R(N) and R(N+1) that are output from a preprocessor 102 of the transmission device 100 and the image sequences R(N) and R(N+1) that are output from decoders 204A and 204B of the television receivers 200A and 200B are chronologically the same but may be different from each other in image quality due to the codecs.

In the transmission device 100, the preprocessor 102 processes image data P at the 120 Hz frame frequency to obtain the image data R(N) on each picture of the base layer (60 Hz level) and the image data R(N+1) on each picture of the enhanced layer (120 Hz level).

Here, the image data R(N) on each picture of the base layer is, within a window range that is an image range including a moving portion equal to or larger than the threshold, image data obtained by blending image data on one of two time-based consecutive pictures in the image data P with image data on the other picture. Outside the predetermined window range, the image data R(N) on each picture of the base layer is image data obtained by extracting the image data on the one of the two time-based consecutive pictures. Meanwhile, the image data R(N+1) on each picture of the enhanced layer is obtained by extracting the image data on the other of the two time-based consecutive pictures.

FIG. 4 illustrates a configuration example of the preprocessor 102. The preprocessor 102 includes a time base division section 121, a window processing section 122, and a blending processing section 123. The time base division section 121 receives the image data P at the 120 Hz frame frequency and divides the image data P into image data on each picture of the base layer (60 Hz level) and image data on each picture of the enhanced layer (120 Hz level). The image data on each picture of the enhanced layer (120 Hz level) serves as the image data R(N+1) on each picture of the enhanced layer from the preprocessor 102 as it is.

The window processing section 122 receives the image data on each picture of the base layer (60 Hz level). Further, the window processing section 122 receives a moving pixel number threshold from a control section, which is not illustrated. The window processing section 122 acquires, for each picture, a window that is an image range including a moving portion equal to or larger than the threshold (moving pixel number threshold) and a blending ratio for the window, on the basis of the image data on the pictures of the base layer (60 Hz level), and transmits these pieces of information to the control section.

FIG. 5 illustrates a configuration example of the window processing section 122. The window processing section 122 includes a bidirectional motion estimation section 131, a speed determination section 132, a window generation section 133, and a blending ratio setting section 134. The bidirectional motion estimation section 131 receives image data on each picture of the base layer (60 Hz level). The bidirectional motion estimation section 131 regards each picture as an N-th picture and obtains a motion vector MV (i, j) between a pair of N-th and (N+2)-th pictures in a bidirectional manner in pixel block units of 4 × 4 or 8 × 8, for example. The motion vector MV (i, j) can be obtained by a well-known block matching method, for example.

FIG. 6 illustrates an example of a change in image between the pair of N-th and (N+2)-th pictures. Note that, in the example of FIG. 6, each square indicates a pixel block. FIG. 6(a) illustrates the image of the N-th picture, FIG. 6(b) illustrates the image of the (N+2)-th picture, and FIG. 6(c) illustrates the composite image of the N-th and (N+2)-th pictures. Note that, in FIG. 6(c), the dashed lines correspond to the image of the N-th picture. As illustrated in FIG. 6(c), in the case of a video, the images of the N-th and (N+2)-th pictures are at least partly different from each other.

Referring back to FIG. 5, the speed determination section 132 receives the motion vector MV (i, j) of each pixel block obtained by the bidirectional motion estimation section 131. Further, the speed determination section 132 receives the moving pixel number threshold from the control section, which is not illustrated. The speed determination section 132 compares the motion vector MV (i, j) of each pixel block to the moving pixel number threshold and determines, as grouping candidates, pixel blocks corresponding to the motion vector MV (i, j) equal to or larger than the threshold.

Here, a moving pixel number threshold T is described. Only the horizontal motion of an object is considered. It is assumed that the object moves from the left end to the right end or from the right end to the left end of a screen W (horizontal pixel number) in a second. Since such a motion is relatively fast, in a case where there is a motion faster than this motion, it is assumed that strobing is perceived. The moving pixel number threshold T between frames in this case is obtained by the following formula (1).

$$T = W/display\ frame\ frequency \quad \cdots\ (1)$$

When actual parameters are applied, in a case where an HD resolution image is used, the moving pixel number threshold T is expressed by the following formula (2).

$$T = W/60\ Hz = 1,920/60 = 32\ (pixels/frame) \quad \cdots\ (2)$$

Further, in a case where a UHD resolution image is used, the moving pixel number threshold T is expressed by the following formula (3).

$$T = W/60\ Hz = 3,840/60 = 64\ (pixels/frame)\quad \cdots\ (3)$$

Note that the moving pixel number threshold T described here is merely exemplary and is not limited to the examples.

The window generation section 133 receives position information regarding the pixel block of each grouping candidate obtained by the speed determination section 132. The window generation section 133 performs horizontal and vertical combining processing on each grouping candidate to put the grouping candidates into groups. The window generation section 133 determines, as a window, a rectangular region including a predetermined number of grouping candidates that have been put into a group, and outputs position information regarding the window.

FIG. 7 illustrates an example of grouping candidates and window generation in a case where the N-th picture provides the image illustrated in FIG. 6(a) and the (N+2)-th picture provides the image illustrated in FIG. 6(b). The hatched pixel blocks are grouping candidates, and the dashed rectangular frames indicate windows (blended windows). In the example of FIG. 7, three windows, namely, a window 1, a window 2, and a window 3, are generated.

An example of a window generation procedure by the window generation section 133 is described. Here, a case where grouping candidates have been obtained as illustrated in FIG. 8(a) is described as an example. Note that, in FIG. 8, each square indicates a pixel block. Pixel blocks with "1" are grouping candidates BLK, while pixel blocks with "0" are not grouping candidates.

First, in each scan line, the grouping candidates BLK adjacent to each other at horizontal positions are horizontally combined. With this, the adjacent (0, 4), (0, 5), and (0, 6) are horizontally combined, the adjacent (1, 6) and (1, 7) are horizontally combined, and the adjacent (2, 0), (2, 1), (2, 2), and (2, 3) are horizontally combined. In addition, the adjacent (2, 6) and (2, 7) are horizontally combined (see FIG. 8(b)).

Secondly, the grouping candidates BLK adjacent to each other at different vertical positions and the same horizontal position are vertically combined. With this, the adjacent (1, 0) and (2, 0) are vertically combined, the adjacent (1, 3) and (2, 3) are vertically combined, the adjacent (0, 6) and (1, 6) are vertically combined, and the adjacent (1, 6) and (2, 6) are vertically combined. In addition, the adjacent (1, 7) and (2, 7) are vertically combined (see FIG. 8(b)).

Thirdly, groups are made on the basis of the respective combinations, to generate windows. As illustrated in FIG. 8(b), a group indicated by the dashed lines can be created from the combination of (0, 4), (0, 5), and (0, 6), the combination of (0, 6) and (1, 6), the combination of (1, 6) and (1, 7), the combination of (1, 6) and (2, 6), and the combination of (1, 7) and (2, 7). Then, a rectangular region including the grouped grouping candidates is determined as the window 1 as illustrated in FIG. 8(c). In the rectangular region of the window 1, the top-left is (0, 4), and the bottom-right is (2, 7).

Further, as illustrated in FIG. 8(b), a group indicated by the alternate long and short dash lines can be created from the combination of (1, 0) and (2, 0), the combination of (1, 3) and (2, 3), and the combination of (2, 0), (2, 1), (2, 2), and (2, 3). Then, a rectangular region including the grouped grouping candidates is determined as the window 2 as illustrated in FIG. 8(c). In the rectangular region of the window 2, the top-left is (1, 0), and the bottom-right is (2, 3).

Referring back to FIG. 5, the blending ratio setting section 134 calculates a blending ratio for each window generated as described above and outputs the window blending ratio information. The blending ratio setting section 134 receives position information regarding each window from the window generation section 133. Further, the blending ratio setting section 134 receives image data on each picture of the base layer (60 Hz level). Further, the blending ratio setting section 134 receives the moving vector MV (i, j) of each pixel block from the speed determination section 132. The blending ratio setting section 134 calculates a blending ratio for each window on the basis of information regarding the motion amounts and contrasts of a moving object in the windows. Blending ratios are calculated in this way, so that unnecessarily strong blending is prevented and blending at an appropriate level is achieved.

The degree of perception of motion discontinuity, namely, strobing, changes depending on the motion amount of a moving object and how much the moving object is noticeable against the background. The motion amount of a moving object in a window can be obtained by using the value of the motion vector MV (i, j) of each pixel block included in the window from the speed determination section 132. In a case where the motion amount of the moving object is relatively small, the degree of perception of the strobing is considered to be small. In contrast, in a case where the motion amount of the moving object is relatively large, the degree of perception of the strobing is considered to be large. It is conceivable to classify the motion amount of a moving object into, for example, three levels of large, medium, and small, on the basis of an interframe moving pixel number or an average value in seconds, to control a blending ratio.

Further, how much a moving object is noticeable against the background can be determined by checking the magnitude of contrast in windows in input image data at the 60 Hz level. For example, as in the following formula (4), a luminance value variance S of each pixel in a window is obtained. Note that, in the formula (4), xi denotes a pixel luminance value, $\mu$ denotes a pixel average value, and n denotes the number of pixels in a window.

$$S = (1/n)*(\Sigma|xi-\mu|)\quad \cdots\ (4)$$

As in the formula (4), the variance S is obtained by dividing the sum of absolute differences of a pixel luminance value and a pixel average value by the number of pixels. With the large variance S, it can be determined that the contrast is large, whereas with the small variance S, it can be determined that the contrast is small. In the case where the contrast is large, the moving object is considered to be visually noticeable against the background. In contrast, in the case where the contrast is small, the moving object is considered not to be visually noticeable against the background. It is conceivable to classify a contrast level into, for example, three levels of large, medium, and small, on the basis of the variance S, to control a blending ratio.

The combination of the two elements, namely, the motion amount and the contrast, is considered. The strobing is most noticeable in a case where the motion amount is large and the contrast is large. In such a case, a strong coefficient is used for a blending ratio. In contrast, in a case where the motion amount is relatively small and the contrast is small, the strobing is not noticeable, and a weak coefficient is used for a blending ratio.

FIG. 9 illustrates an example of a table for setting a blending ratio by the blending ratio setting section 134. For example, in a case where the level of a motion amount M is small (level 1) and the level of a contrast C is small (level 1), the blending ratio is set to "1 (weak)." Further, for example, in a case where the level of the motion amount M is medium (level 2) and the level of the contrast C is medium (level 2), the blending ratio is set to "3 (moderate)." Further, for example, in a case where the level of the motion amount M is large (level 3) and the level of the contrast C is large (level 3), the blending ratio is set to "5 (strong)."

Here, in the case where the blending ratio is "1 (weak)," 60 Hz level image data and 120 Hz level image data are blended at 4:1, for example. Further, in the case where the blending ratio is "5 (strong)," 60 Hz level image data and 120 Hz level image data are blended at 1:1, for example. Further, in a case where the blending ratio between these is "2 (relatively weak)," "3 (moderate)," or "4 (relatively strong)," 60 Hz level image data and 120 Hz level image data are blended at a ratio of 4:1 to 1:1.

However, in a case where a moving object itself has a texture that is thin in its motion direction, the texture may be duplicated due to blending in some cases, and hence, a weak coefficient is used for a blending ratio on purpose in such a case. Examples of setting blending ratios in this case are illustrated in FIG. 9 with "#." Note that, in a determination of whether or not a texture is thin, a texture can be determined as thin in a case where edges are quite close to each other in an edge detection image obtained with a two-dimensional differential filter. In contrast, in a case where the edges are away from each other to some extent, it can be regarded that there is an object of a certain thickness between the edges. Basic examples of the two-dimensional differential filter include Laplacian filters and Sobel operators.

The flowchart of FIG. 10 illustrates an example of a processing procedure that is performed by the window processing section 122, which is illustrated in FIG. 5, on each picture to acquire windows and blending ratios for the windows.

First, the window processing section 122 starts the processing in Step ST1. Next, in Step ST2, the window processing section 122 calculates, by the bidirectional motion estimation section 131, the motion vector (MV) between the picture-pair (N-th picture and (N+2)-th picture), that is, from the N-th picture to the (N+2)-th picture, in pixel block units and compares, by the speed determination section 132, the motion vector MV (i, j) of each pixel block to the moving pixel number threshold, thereby obtaining, as forward window grouping candidates, pixel blocks of the (N+2)-th picture that correspond to the motion vector MV (i, j) equal to or larger than the threshold.

Next, in Step ST3, the window processing section 122 calculates, by the bidirectional motion estimation section 131, the motion vector (MV) between the picture-pair (N-th picture and (N+2)-th picture), that is, from the (N+2)-th picture to the N-th picture, in pixel block units and compares, by the speed determination section 132, the motion vector MV (i, j) of each pixel block to the moving pixel number threshold, thereby obtaining, as backward window grouping candidates, pixel blocks of the N-th picture that correspond to the motion vector MV (i, j) equal to or larger than the threshold.

Next, in Step ST4, the window processing section 122 performs, by the window generation section 133, horizontal and vertical combining processing on the grouping candidates obtained in Step ST2 and Step ST3. The window processing section 122 determines, as a window, a rectangular region including a predetermined number of grouping candidates that have been put into a group, and outputs position information regarding the window.

Next, in Step ST5, the window processing section 122 calculates, by the blending ratio setting section 134, information regarding the motion amount M and the contrast C of the moving object, for each window. The window processing section 122 sets blending ratios on the basis of the information, by referring to the blending ratio setting table (see FIG. 9), for example, and outputs the blending ratio information. Then, the window processing section 122 ends the processing in Step ST6.

The flowchart of FIG. 11 illustrates an example of a processing procedure for obtaining the grouping candidates in Step ST2 of FIG. 10. This flowchart illustrates processing for a single pixel block, and this processing is actually performed on all the pixel blocks.

First, in Step ST11, the window processing section 122 starts the processing by the bidirectional motion estimation section 131. Next, in Step ST12, the window processing section 122 obtains the motion vector MV (i, j) of a target pixel block in the N-th picture between the picture-pair (N-th picture and (N+2)-th picture), that is, from the N-th picture to the (N+2)-th picture.

Next, in Step ST13, the window processing section 122 determines, by the speed determination section 132, whether or not the motion vector MV (i, j) of the target pixel block is equal to or larger than the moving pixel number threshold. When the motion vector MV (i, j) is equal to or larger than the threshold, in Step ST14, the window processing section 122 determines, by the speed determination section 132, a pixel block of the (N+2)-th picture that corresponds to the motion vector MV (i, j) as a forward window grouping candidate, and thereafter ends the processing in Step ST15. Meanwhile, when the motion vector MV (i, j) is not equal to or larger than the threshold in Step ST13, the window processing section 122 immediately ends the processing in Step ST15.

Note that a processing procedure for obtaining the grouping candidates in Step ST3 of FIG. 10, which is not described in detail, is performed similarly to that illustrated in the flowchart of FIG. 11.

Further, while, in the example described above, the blending ratio for each window is calculated on the basis of the information regarding the motion amounts and contrasts of the moving object in the windows, it is also conceivable to calculate a blending ratio on the basis of either motion amount information or contrast information.

Referring back to FIG. 4, the blending processing section 123 receives image data on each picture of the base layer (60 Hz level) and image data on each picture of the enhanced layer (120 Hz level) obtained by the time base division section 121. Further, the blending processing section 123 receives blending parameters (including blending processing information such as information regarding the position and blending ratio of each window and information regarding a blending target image) from the control section, which is not illustrated. The blending processing section 123 appropriately blends, for each picture-pair, the image data on the base layer with the image data on the enhanced layer to generate the image data R(N) on each picture of the base layer and outputs the image data R(N) to the preprocessor 102.

In this case, the blending processing section 123 blends, within a window range, the image data on the base layer (60 Hz level) with the image data on the enhanced layer (120 Hz level) at a blending ratio for a window, thereby obtaining the image data R(N) on the base layer. Further, the blending processing section 123 determines, outside the window range, the image data on the base layer (60 Hz level) itself as the image data R(N) on the base layer.

Referring back to FIG. 3, in the transmission device 100, an encoder 103 performs encoding processing by using, for example, HEVC (High Efficiency Video Coding) on the image data R(N) on each picture of the base layer and the image data R(N+1) on each picture of the enhanced layer, thereby obtaining a base stream STb and an enhanced stream STe.

The base stream STb includes the encoded image data of the image data R(N) on each picture of the base layer (60 Hz level). The enhanced stream STe includes the encoded image data of the image data R(N+1) on each picture of the enhanced layer (120 Hz level).

Further, in the transmission device 100, the encoder 103 adds blending parameters (including blending processing information such as information regarding the position and blending ratio of each window and information regarding a blending target image) to at least the image data on each picture of the base layer (60 Hz level). With the blending parameters added in this way, the reception side can easily and appropriately perform reverse blending processing (separation processing).

In the embodiment, a newly defined blending window information SEI message (Blending_window_information SEI message) is inserted into an "SEIs" portion in an access unit (AU).

FIG. 12 illustrates the syntax of the blending window information SEI message, and FIG. 13 illustrates the semantics of main information regarding the syntax. A "blending_window_information_id" field is identification information indicating that there is a blending window information SEI message.

A "number_of_blending_windows" field indicates the number of windows to be blended. A "current_picture_position" field indicates the time-based position of a current picture of two pictures contributing to blending processing. For example, "1" indicates one of the two pictures that comes first in the chronological order, and "0" indicates one of the two pictures that comes second in the chronological order. A "blend_flag" field indicates whether or not the picture has been blended. For example, "1" indicates blended pictures, and "0" indicates unblended pictures.

"window_start_position_horizontal," "window_start_position_vertical," "window_end_position_horizontal," "window_end_position_vertical," "blend_coefficient_A," and "blend_coefficient_B" fields are repeated as many times as the number of windows to be blended that is indicated by "number_of_blending_windows."

The "window_start_position_horizontal" field indicates the horizontal pixel position of the start position of a window by a pixel-by-pixel offset from the top-left of the image. The "window_start_position_vertical" field indicates the vertical pixel position of the start position of a window by a pixel-by-pixel offset from the top-left of the image.

The "window_end_position_horizontal" field indicates the horizontal pixel position of the end position of a window by a pixel-by-pixel offset from the top-left of the image. The "window_end_position_vertical" field indicates the vertical pixel position of the end position of a window by a pixel-by-pixel offset from the top-left of the image.

The "blend_coefficient_A" field indicates a numerator of coefficients in blending calculation. The "blend_coefficient_B" field indicates a denominator of coefficients in blending calculation.

Referring back to FIG. 3, in the television receiver 200A capable of decoding image data at the 120 Hz frame frequency, the decoder 204A performs decoding processing on the two streams STb and STe, thereby obtaining the image data R(N) on each picture of the base layer (60 Hz level) and the image data R(N+1) on each picture of the enhanced layer (120 Hz level).

Then, in the television receiver 200A, a postprocessor 205A processes the image data R(N) and R(N+1), thereby obtaining the image data P at the 120 Hz frame frequency similar to the image data P at the 120 Hz frame frequency on the transmission side.

In this case, the postprocessor 205A performs, in the image data R(N) on each picture of the base layer (60 Hz level), within a window range in which blending processing has been performed, reverse blending processing (separation processing) by using the image data R(N+1) on each picture of the enhanced layer (120 Hz level), on the basis of blending parameters (including blending processing information such as information regarding the position and blending ratio of each window and information regarding a blending target image) supplied from the control section.

FIG. 14 illustrates a configuration example of the postprocessor 205A. The postprocessor 205A includes a reverse blending processing section 251 and a time base combining section 252. The reverse blending processing section 251 receives image data on each picture of the base layer (60 Hz level) and image data on each picture of the enhanced layer (120 Hz level). Further, the reverse blending processing section 251 receives blending parameters from the control section, which is not illustrated.

The reverse blending processing section 251 appropriately performs, for each picture-pair, reverse blending processing on image data on the base layer by using image data on the enhanced layer to generate image data R'(N) on each picture of the base layer and supplies the image data R'(N) to the time base combining section 252. In this case, the reverse blending processing section 251 performs, within a window range in which the image data R(N) has been subjected to blending processing, reverse blending processing based on a blending ratio for the window, on the image data R(N) by using image data on the enhanced layer (120 Hz level) that corresponds to the window position of the image data R(N), and outputs the resultant data as the image data R'(N). Further, the reverse blending processing section 251 outputs, outside the window range, the image data R(N) itself as the image data R'(N) since the image data R(N) has not been subjected to blending processing.

The time base combining section 252 combines the image data R'(N) on each picture of the base layer obtained by the reverse blending processing section 251 and the image data R(N+1) on each picture of the enhanced layer, thereby obtaining the image data P at the 120 Hz frame frequency as output from the postprocessor 205A.

Referring back to FIG. 3, the television receiver 200A obtains, as display image data, the image data P itself at the 120 Hz frame frequency obtained by the postprocessor 205A or the image data P whose frame rate has been increased through frame interpolation by an MCFI (Motion Compensated Frame Insertion) section 206A.

Further, in the television receiver 200B capable of decoding image data at the 60 Hz frame frequency, the decoder 204B performs decoding processing on the stream STb to obtain image data at the 60 Hz frame frequency including the image data R(N) on each picture of the base layer (60 Hz level). Then, the television receiver 200B obtains, as display image data, the image data itself at the 60 Hz frame frequency or the image data whose frame rate has been increased through frame interpolation by an MCFI section 206B.

"Configuration of Transmission Device"

FIG. 15 illustrates a configuration example of the transmission device 100. The transmission device 100 includes a control section 101, the preprocessor 102, the encoder 103, a multiplexer 104, and a transmission section 105. The control section 101 controls the operation of each part of the transmission device 100.

The preprocessor 102 processes the image data P at the 120 Hz frame frequency to obtain the image data R(N) on each picture of the base layer (60 Hz level) and the image data R(N+1) on each picture of the enhanced layer (120 Hz level) (see FIG. 4).

In this case, in the image data R(N) on each picture of the base layer, within a window range that is an image range including a moving portion equal to or larger than the threshold, blending processing is performed by using the image data R(N+1) on pictures of the enhanced layer paired with the respective pictures of the base layer. A blending ratio in this case is set for each window on the basis of information regarding the motion amounts and contrasts of a moving object in the windows (see FIG. 5 and FIG. 9).

The encoder 103 performs encoding processing by using, for example, HEVC on the image data R(N) on each picture of the base layer and the image data R(N+1) on each picture of the enhanced layer that are output from the preprocessor 102, thereby obtaining the base stream STb and the enhanced stream STe. Here, the base stream STb includes the encoded image data of the image data R(N) on each picture of the base layer (60 Hz level). The enhanced stream STe includes the encoded image data of the image data R(N+1) on each picture of the enhanced layer (120 Hz level).

Further, the encoder 103 adds, to at least the image data on each picture of the base layer (60 Hz level), blending parameters (including blending processing information such as information regarding the position and blending ratio of each window and information regarding a blending target image). Specifically, the newly defined blending window information SEI message (see FIG. 12) is inserted into the "SEIs" portion in the access unit (AU) of each picture.

The multiplexer 104 packetizes the base stream STb and the enhanced stream STe, which have been generated by the encoder 103, into PES (Packetized Elementary Stream) packets. The multiplexer 104 further packetizes the PES packets into transport packets and multiplexes the transport packets, thereby obtaining the transport stream TS as a multiplexed stream. The transmission section 105 modulates the transport stream TS by a modulation technique suitable for broadcasting, for example, QPSK or OFDM, and transmits the RF modulated signal from the transmission antenna.

FIG. 16 illustrates a configuration example of the transport stream TS. This example represents a configuration example in a case where blending processing information is added only to a 60 Hz level picture. The transport stream TS includes two streams (substreams), namely, the base stream STb and the enhanced stream STe.

That is, in this configuration example, there are a PES packet "video PES1" of the base stream STb identified by a packet identifier "PID1" and a PES packet "video PES2" of the enhanced stream STe identified by a packet identifier "PID2." The blending window information SEI message (see FIG. 12) is inserted into encoded image data on each 60 Hz level picture contained in the PES packet "video PES1."

Further, the transport stream TS includes a PMT (Program Map Table) as one piece of PSI (Program Specific Information). The PSI is information describing which program belongs to each elementary stream included in the transport stream.

The PMT includes a program loop describing information associated with all of the programs. Further, the PMT includes a video elementary stream loop having information associated with each video stream. In this configuration example, there are a video elementary stream loop "video ES1 loop" corresponding to the base stream STb and a video elementary stream loop "video ES2 loop" corresponding to the enhanced stream STe.

In the "video ES1 loop," information corresponding to the base stream STb (video PES1), such as stream type and packet identifier (PID), and a descriptor describing information associated with the video stream in question are placed. In the case of HEVC, the stream type is "0 × 24" indicating base streams.

Further, in the "video ES2 loop," information corresponding to the enhanced stream STe (video PES2), such as stream type and packet identifier (PID), and a descriptor describing information associated with the video stream in question are placed. In the case of HEVC, the stream type is "0 × 25" indicating enhanced streams.

FIG. 17 illustrates another configuration example of the transport stream TS. This example represents a configuration example in a case where blending processing information is added to all pictures. The blending information SEI message (see FIG. 12) is inserted into encoded image data on each 60 Hz level picture contained in the PES packet "video PES1" and encoded image data on each 120 Hz level picture contained in the PES packet "video PES2." The other configuration is similar to the configuration example of the transport stream TS illustrated in FIG. 16, and hence, a detailed description thereof is omitted.

The operation of the transmission device 100 illustrated in FIG. 15 is briefly described. The image data P at the 120 Hz frame frequency is input to the preprocessor 102 (see FIG. 4). The preprocessor 102 processes the image data P at the 120 Hz frame frequency to obtain the image data R(N) on each picture of the base layer (60 Hz level) and the image data R(N+1) on each picture of the enhanced layer (120 Hz level). In this case, in the image data R(N) on each picture of the base layer, within a window range that is an image range including a moving portion equal to or larger than the threshold, blending processing is performed by using the image data R(N+1) on pictures of the enhanced layer paired with the respective pictures of the base layer.

The image data R(N) on each picture of the base layer and the image data R(N+1) on each picture of the enhanced layer that are obtained by the preprocessor 102 are supplied to the encoder 103. The encoder 103 performs encoding processing by using, for example, HEVC on each pieces of the image data R(N) and R(N+1) to obtain the base stream STb and the enhanced stream STe.

Further, the encoder 103 adds, to at least the encoded image data on each picture of the 60 Hz level image data subjected to blending processing, blending parameters (including blending processing information such as information regarding the position and blending ratio of each window and information regarding a blending target image). Specifically, the newly defined blending window information SEI message (see FIG. 12) is inserted into the "SEIs" portion in the access unit (AU) of each picture.

The base stream STb and the enhanced stream STe, which have been generated by the encoder 103, are supplied to the multiplexer 104. The multiplexer 104 packetizes the respective streams into PES packets. The multiplexer 104 further packetizes the PES packets into transport packets and multiplexes the transport packets, thereby obtaining the transport stream TS as a multiplexed stream.

The transport stream TS generated by the multiplexer 104 is transmitted to the transmission section 105. The transmission section 105 modulates the transport stream TS by a modulation technique suitable for broadcasting, for example, QPSK or OFDM, and transmits the RF modulated signal from the transmission antenna.

"Configuration of Television Receiver"

FIG. 18 illustrates a configuration example of the television receiver 200A capable of decoding image data at the 120 Hz frame frequency. The television receiver 200A includes a control section 201A, a reception section 202A, a demultiplexer 203A, the decoder 204A, the postprocessor 205A, the MCFI section 206A, and a panel display section 207A.

The control section 201A controls the operation of each part of the television receiver 200A. The reception section 202A demodulates an RF modulated signal received by the reception antenna to acquire the transport stream TS. The demultiplexer 203A extracts the base stream STb and the enhanced stream STe from the transport stream TS by PID filtering and supplies the base stream STb and the enhanced stream STe to the decoder 204A.

The decoder 204 performs decoding processing on the streams STb and STe to obtain the image data R(N) on each picture of the base layer (60 Hz level) and the image data R(N+1) on each picture of the enhanced layer (120 Hz level). In this case, in the image data R(N) on each picture of the base layer, within a window range that is an image range including a moving portion equal to or larger than the threshold, blending processing has been performed by using the image data R(N+1) on pictures of the enhanced layer paired with the respective pictures of the base layer.

Further, the decoder 204A extracts a parameter set and SEI inserted into each of the access units forming the streams STb and STe and transmits the parameter set and the SEI to the control section 201A. In this case, the blending window information SEI message (see FIG. 12) having blending parameters (including blending processing information such as information regarding the position and blending ratio of each window and information regarding a blending target image) is also extracted. The control section 201A controls, on the basis of the blending parameters, reverse blending processing (separation processing) on 60 Hz level image data in the postprocessor 205A.

The postprocessor 205A processes the image data R(N) and R(N+1) obtained by the decoder 204A to obtain the image data P at the 120 Hz frame frequency similar to the image data P at the 120 Hz frame frequency on the transmission side (see FIG. 14). In this case, the postprocessor 205A performs, in the image data R(N) on each picture of the base layer (60 Hz level), within a window range in which blending processing has been performed, reverse blending processing (separation processing) by using the image data R(N+1) on pictures of the enhanced layer (120 Hz level) paired with the respective pictures of the base layer, on the basis of blending parameters supplied from the control section 201A.

The MCFI section 206A performs frame interpolation processing for motion compensation on the image data P at the 120 Hz frame frequency obtained by the postprocessor 205A, thereby obtaining image data at a further increased frame rate. Note that the MCFI section 206A is not provided in some cases. The panel display section 207A displays an image based on 240 Hz image data obtained by the postprocessor 205 or based on the image data whose frame rate has been increased by the MCFI section 206A.

The operation of the television receiver 200A illustrated in FIG. 18 is briefly described. The reception section 202A demodulates an RF modulated signal received by the reception antenna to acquire the transport stream TS. The transport stream TS is transmitted to the demultiplexer 203A. The demultiplexer 203A extracts the base stream STb and the enhanced stream STe from the transport stream TS by PID filtering and supplies the base stream STb and the enhanced stream STe to the decoder 204A.

The decoder 204A performs decoding processing on the streams STb and STe to obtain the image data R(N) on each picture of the base layer (60 Hz level) and the image data R(N+1) on each picture of the enhanced layer (120 Hz level). In this case, in the image data R(N) on each picture of the base layer, within a window range that is an image range including a moving portion equal to or larger than the threshold, blending processing has been performed by using the image data R(N+1) on pictures of the enhanced layer paired with the respective pictures of the base layer.

Further, the decoder 204A extracts a parameter set and SEI inserted into each of the access units forming the streams STb and STe and transmits the parameter set and the SEI to the control section 201. In this case, the blending window information SEI message (see FIG. 12) having blending parameters (including blending processing information such as information regarding the position and blending ratio of each window and information regarding a blending target image) is also extracted. On the basis of the blending parameters, reverse blending processing (separation processing) by the postprocessor 205A on 60 Hz level image data is controlled.

The image data R(N) on each picture of the base layer and the image data R(N+1) on each picture of the enhanced layer that are obtained by the decoder 204A are supplied to the postprocessor 205A. The postprocessor 205A processes the image data R(N) and R(N+1) to obtain the image data P at the 120 Hz frame frequency similar to the image data P at the 120 Hz frame frequency on the transmission side.

In this case, in the image data R(N) on each picture of the base layer, within a window range in which blending processing has been performed, reverse blending processing (separation processing) using the image data R(N+1) on pictures of the enhanced layer paired with the respective pictures of the base layer is performed. Thus, 60 Hz level image data included in the image data P at the 120 Hz frame frequency that is output from the postprocessor 205A is unblended data.

The image data at the 120 Hz frame frequency obtained by the postprocessor 205A or the image data whose frame rate has been further increased by the MCFI section 206A is supplied to the panel display section 207A. The panel display section 207A displays an image based on the image data.

FIG. 19 illustrates a configuration example of the television receiver 200B capable of decoding 60 Hz image data.

The television receiver 200B includes a control section 201B, a reception section 202B, a demultiplexer 203B, the decoder 204B, the MCFI section 206B, and a panel display section 207B.

The control section 201B controls the operation of each part of the television receiver 200B. The reception section 202B demodulates an RF modulated signal received by the reception antenna to acquire the transport stream TS. The demultiplexer 203B extracts the base stream STb from the transport stream TS by PID filtering and supplies the base stream STb to the decoder 204B.

The decoder 204B performs decoding processing on the base stream STb to obtain image data at the 60 Hz frame frequency including the image data R(N) on each picture of the base layer (60 Hz level). In the image data R(N) on each picture of the base layer, within a window range in which blending processing has been performed, blending processing has been performed by using the image data R(N+1) on pictures of the enhanced layer paired with the respective pictures of the base layer.

The MCFI section 206B performs frame interpolation processing for motion compensation on the image data at the 60 Hz frame frequency to obtain image data at a further increased frame rate. Note that the MCFI section 206B is not provided in some cases. The panel display section 207B displays an image based on the image data at the 60 Hz frame frequency obtained by the decoder 204B or based on the image data whose frame rate has been increased by the MCFI section 206B.

The operation of the television receiver 200B illustrated in FIG. 19 is briefly described. The reception section 202B demodulates an RF modulated signal received by the reception antenna to acquire the transport stream TS. The transport stream TS is transmitted to the demultiplexer 203B. The demultiplexer 203B extracts the base stream STb from the transport stream TS by PID filtering and supplies the base stream STb to the decoder 204B.

The decoder 204B performs decoding processing on the base stream STb to obtain image data at the 60 Hz frame frequency including the image data R(N) on each picture of the base layer. The image data at the 60 Hz frame frequency obtained by the decoder 204B or the image data whose frame rate has been further increased by the MCFI section 206B is supplied to the panel display section 207B. The panel display section 207B displays an image based on the image data.

As described above, in the transmission/reception system 10 illustrated in FIG. 1, the transmission side transmits image data on each picture of the base layer in which blending processing has been performed only within a window range that is an image range including a moving portion equal to or larger than the moving pixel number threshold, and transmits image data on each picture of the enhanced layer. Thus, on the reception side, a strobing degradation within the window range of the layer at the basic frame frequency can be avoided, and parts in other ranges that are originally to be clearly displayed can be prevented from being displayed as double images.

Further, in the transmission/reception system 10 illustrated in FIG. 1, the reception side receives image data on each picture of the base layer in which blending processing has been performed only within a predetermined window range, and receives image data on each picture of the enhanced layer. Then, the reception side obtains display image data by using, depending on the display capability, only the image data on each picture of the base layer or both the image data on each picture of the base layer and the image data on each picture of the enhanced layer. Thus, for example, a strobing degradation within the predetermined window range of the layer at the basic frame frequency can be avoided, and parts in other ranges that are originally to be clearly displayed can be prevented from being displayed as double images.

Note that the effects described herein are merely exemplary and are not limitative, and other effects may be provided.

<2. Modified Example>

In the example in the above-mentioned embodiment, the transmission/reception system 10 includes the transmission device 100 and the television receiver 200, but the configuration of a transmission/reception system to which the present technology is applicable is not limited thereto. For example, as illustrated in FIG. 20, a transmission/reception system 10A including, instead of the television receiver 200, a set-top box 200-1 and a display 200-2 connected to each other through a digital interface such as an HDMI (High-Definition Multimedia Interface) is also conceivable. Note that "HDMI" is a registered trademark.

FIG. 21 illustrates the outline of processing by the transmission device 100, the set-top box 200-1, and the display 200-2 in this case. The operation of the transmission device 100, the set-top box 200-1, and the display 200-2, which is not described in detail, is similar to that of the transmission device 100 and the television receiver 200 (200A and 200B) illustrated in FIG. 3. Note that, from a set-top box 200A-1 to a display 200A-2, in addition to the image data R(N) and R(N+1), blending parameters (including blending processing information such as information regarding the position and blending ratio of each window and information regarding a blending target image) are transmitted as information for performing reverse blending processing (separation processing) on the image data R(N) on each picture of the base layer (60 Hz level). Note that it is also conceivable that the decoder 204A has the function of the postprocessor 205A.

The set-top box 200A-1 inserts blending parameters corresponding to respective pictures into, for example, the blanking periods of image data on the respective pictures to transmit the blending parameters. Here, a newly defined HDMI blending window InfoFrame (HDMI blending_window InfoFrame) is used, but the present technology is not limited thereto.

FIG. 22 illustrates the syntax of an HDMI blending_window InfoFrame which corresponds to the syntax of the blending information SEI message of FIG. 12 described above. A description of the details of each piece of information is omitted. The first 3 bytes of the InfoFrame serve as a header field in which information regarding an InfoFrame type, a version number, and a data byte length is placed.

8-bit information "number_of_blending_windows" is placed in a data byte 0 (N+0). 1-bit information "current_picture_position" is placed in the seventh bit of a data byte 1 (N+1). Further, 1-bit information "blend_flag" is placed in the sixth bit of the data byte 1 (N+1).

Further, 16-bit information "window_start_position_horizontal" is placed in a data byte 2 (N+2) and a data byte 3 (N+3). Further, 16-bit information "window_start_position_vertical" is placed in a data byte 4 (N+4) and a data byte 5 (N+5). Further, 16-bit information "window_end_position_horizontal" is placed in a data byte 6 (N+6) and a data byte 7 (N+7). Further, 16-bit information "window_end_position_vertical" is placed in a data byte 8 (N+8) and a data byte 9 (N+9).

Further, 8-bit information "blend_coefficient_A" is placed in a data byte 10 (N+10). Further, 8-bit information "blend_coefficient_B" is placed in a data byte 11 (N+11). Further, the elements in the data byte 2 to the data byte 11 are repeated in a data byte 12 (N+12) and following data bytes, on the basis of the value of "number_of_blending_windows."

Further, in the example in the above-mentioned embodiment, the image data P(N) on each picture of the base layer (60 Hz level), which is obtained by processing the image data at the 120 Hz frame frequency, and the image data P(N+1) on each picture of the enhanced layer (120 Hz level) are transmitted from the transmission side to the reception side. However, it is also conceivable that image data at the 120 Hz frame frequency is transmitted as it is from the transmission side to the reception side and that the reception side processes the image data at the 120 Hz frame frequency to obtain and use image data at the 60 Hz frame frequency corresponding to the image data P(N) on each picture of the base layer (60 Hz level).

FIG. 23 illustrates a configuration example of a transmission/reception system 10B in this case. The transmission/reception system 10B includes a transmission device 100B, an interface box (IFB) 300-1, and an image display device 300-2. The image display device 300-2 is a television receiver or a display, for example. The interface box 300-1 is connected to the image display device 300-2 through a digital interface such as an HDMI.

The transmission device 100B transmits the transport stream TS which serves as a container, on a broadcast wave. The transport stream TS forms the container serving as a multiplexed stream. The transport stream TS includes a base stream obtained by encoding image data at the 120 Hz frame frequency.

The interface box 300-1 receives the above-mentioned transport stream TS transmitted from the transmission device 100B on the broadcast wave. The interface box 300-1 performs decoding processing on the base stream included in the transport stream TS to obtain image data at the 120 Hz frame frequency. The image data at the 120 Hz frame frequency is transmitted to the image display device 300-2 configured to handle 120 Hz image data.

Further, the interface box 300-1 processes the image data at the 120 Hz frame frequency obtained as described above to obtain image data at the 60 Hz frame frequency that corresponds to the image data P(N) on each picture of the base layer (60 Hz level) obtained by the preprocessor 102 of the transmission device 100 of FIG. 1. The image data at the 60 Hz frame frequency is transmitted to the image display device 300-2 configured to handle 60 Hz image data. Note that, in the image data R(N) on each picture of the base layer, as described above, within a window range that is an image range including a moving portion equal to or larger than the threshold, blending processing has been performed by using the image data R(N+1) on pictures of the enhanced layer paired with the respective pictures of the base layer.

FIG. 24 illustrates the outline of processing by the transmission device 100B, the interface box 300-1, and the image display device 300-2 (300A-2 and 300B-2). Note that the image data P at the 120 Hz frame frequency that is input to the transmission device 100B and the image data P at the 120 Hz frame frequency that is output from a decoder 311 of the interface box 300-1 are chronologically the same but may be different from each other in image quality due to the codecs.

In the transmission device 100, an encoder 103B encodes the image data P at the 120 Hz frame frequency to obtain the base stream STb. The base stream STb is included in the transport stream TS to be transmitted.

In the interface box 300-1, the decoder 311 performs decoding processing on the base stream STb included in the transport stream TS to be transmitted, thereby obtaining the image data P at the 120 Hz frame frequency. Further, in the interface box 300-1, a processor 312 processes the image data P to obtain image data at the 60 Hz frame frequency that corresponds to the image data P(N) on each picture of the base layer (60 Hz level) obtained by the preprocessor 102 of the transmission device 100 of FIG. 1.

FIG. 25 illustrates a configuration example of the processor 312. In FIG. 25, parts corresponding to those of the preprocessor 102 of FIG. 4 are denoted by the same reference signs. The processor 312, which is not described in detail, includes the time base division section 121, the window processing section 122, and the blending processing section 123, and performs processing similar to that by the preprocessor 102 of FIG. 4, thereby outputting, as image data at the 60 Hz frame frequency, the image data P(N) on each picture of the base layer (60 Hz level).

Referring back to FIG. 24, the image data P at the 120 Hz frame frequency obtained by the decoder 311 of the interface box 300-1 is transmitted to the image display device 300A-2 through a digital interface such as an HDMI. The image display device 300A-2 uses, as display image data, the image data P itself or the image data P whose frame rate has been increased through frame interpolation by an MCFI (Motion Compensated Frame Insertion) section 321A.

Further, the image data R(N) at the 60 Hz frame frequency obtained by the processor 312 of the interface box 300-1 is transmitted to the image display device 300B-2 through a digital interface such as an HDMI. The image display device 300B-2 uses, as display image data, the image data R(N) itself or the image data R(N) whose frame rate has been increased through frame interpolation by an MCFI (Motion Compensated Frame Insertion) section 321B.

In this way, in the transmission/reception system 10B illustrated in FIG. 23, the interface box 300-1 obtains image data on each picture of the base layer in which blending processing has been performed only within a predetermined window range that is an image range including a moving portion equal to or larger than the threshold. Thus, a strobing degradation within the predetermined window range of the layer at the basic frame frequency can be avoided, and parts in other ranges that are originally to be clearly displayed can be prevented from being displayed as double images.

Further, in the example in the above-mentioned embodiment, the image data P(N) on each picture of the base layer (60 Hz level), which is obtained by processing the image data at the 120 Hz frame frequency, and the image data P(N+1) on each picture of the enhanced layer (120 Hz level) are handled, but the present technology is not limited thereto. For example, it is similarly conceivable that the image data P(N) on each picture of a base layer (120 Hz level) obtained by processing image data at a 240 Hz frame frequency and the image data P(N+1) on each picture of an enhanced layer (240 Hz level) are handled.

Further, in the example in the above-mentioned embodiment, the container is the transport stream (MPEG-2 TS). However, the present technology is also applicable to systems configured to perform distribution to reception terminals by using networks such as the Internet. Containers in MP4 or other formats are often used in distribution via the Internet. That is, examples of the container include containers in various formats such as the transport stream (MPEG-2 TS) and MMT (MPEG Media Transport) which have been employed as digital broadcasting standards and ISOBMFF (MP4) used in internet distribution.

The main features of the present technology are as follows. Image data on each picture of a base layer in which blending processing has been performed only within a predetermined window range and image data on each picture of an enhanced layer are received. Display image data is obtained by using, depending on a display capability, only the image data on each picture of the base layer or both the image data on each picture of the base layer and the image data on each picture of the enhanced layer. Consequently, a strobing degradation within the predetermined window range of the layer at the basic frame frequency can be avoided, and parts in other ranges that are originally to be clearly displayed can be prevented from being displayed as double images (see FIG. 3, FIG. 4, and FIG. 7).

[Reference Signs List]

10, 10A, 10B ··· Transmission/reception system
100, 100B ··· Transmission device
101 ··· Control section
102 ··· Preprocessor
103, 103B ··· Encoder
104 ··· Multiplexer
105 ··· Transmission section
121 ··· Time base division section
122 ··· Window processing section
123 ··· Blending processing section
131 ··· Bidirectional motion estimation section
132 ··· Speed determination section
133 ··· Window generation section
134 ··· Blending ratio setting section
200, 200A, 200B ··· Television receiver
200-1, 200A-1, 200B-1 ··· Set-top box
200-2, 200A-2, 200B-2 ··· Display
201A, 201B ··· Control section
202A, 202B ··· Reception section
203A, 203B ··· Demultiplexer
204A, 204B ··· Decoder
205A ··· Postprocessor

206A, 206B ··· MCFI section
207A, 207B ··· Panel display section
251 ··· Reverse blending processing section
252 ··· Time base combining section
300-1 ··· Interface box
300-2, 300A-2, 300B-2 ··· Image display device
311 ··· Decoder
312 ··· Processor

**Claims**

1. A reception device (200) comprising:

   a reception section (202A, 202B) configured to receive image data on each picture of a base layer and image data on each picture of an enhanced layer; and
   a processing section (205A) configured to obtain display image data by using, depending on a display capability, only the image data on each picture of the base layer or both the image data on each picture of the base layer and the image data on each picture of the enhanced layer, **characterized by**
   the image data on each picture of the base layer includes, within an image range including a moving portion, image data obtained by blending image data on one of two time-based consecutive pictures in image data at a predetermined frame rate with image data on the other of the two time-based consecutive pictures, and outside the image range, the image data on each picture of the base layer includes image data obtained by extracting the image data on the one of the two time-based consecutive pictures,
   the image data on each picture of the enhanced layer includes image data obtained by extracting the image data on the other of the two time-based consecutive pictures, and
   the moving portion is equal to or larger than a threshold and is extracted based on image data on each picture of the image data at the predetermined frame rate that corresponds to the image data on each picture of the base layer.

2. The reception device (200) according to claim 1,

   wherein the processing section (205A) is configured to perform reverse blending processing, within the image range, on the image data on each picture of the base layer in a case where the processing section obtains the display image data by using both the image data on each picture of the base layer and the image data on each picture of the enhanced layer,
   wherein the reverse blending processing is performed within a window range in which the image data has been subjected to blending processing, using image data on the enhanced layer.

3. The reception device (200) according to claim 2,

   wherein at least the image data on each picture of the base layer includes blending processing information, and the processing section (205A) is configured to perform the reverse blending processing, within the range of a predetermined window, on the image data on each picture of the base layer, based on the blending processing information.

4. The reception device (200) according to claim 3,
   wherein the blending processing information includes position information regarding the image range including the moving portion.

5. The reception device (200) according to claim 4,
   wherein the blending processing information includes blending ratio information regarding the image range including the moving portion.

6. The reception device (200) according to any one of claims 1 to 5,
   wherein the reception device is a television receiver (200) comprising a display panel (207B).

7. A reception method comprising:

receiving image data on each picture of a base layer and image data on each picture of an enhanced layer; and obtaining display image data by using, depending on a display capability, only the image data on each picture of the base layer or both the image data on each picture of the base layer and the image data on each picture of the enhanced layer, **characterized by**

the image data on each picture of the base layer includes, within an image range including a moving portion , image data obtained by blending image data on one of two time-based consecutive pictures in image data at a predetermined frame rate with image data on the other of the two time-based consecutive pictures, and outside the image range, the image data on each picture of the base layer includes image data obtained by extracting the image data on the one of the two time-based consecutive pictures,

the image data on each picture of the enhanced layer includes image data obtained by extracting the image data on the other of the two time-based consecutive pictures, and

the moving portion is equal to or larger than a threshold and is extracted based on image data on each picture of the image data at the predetermined frame rate that corresponds to the image data on each picture of the base layer.

8. The reception method according to claim 7,

wherein obtaining display image data includes performing reverse blending processing, within the image range, on the image data on each picture of the base layer in a case where the display image data is obtained by using both the image data on each picture of the base layer and the image data on each picture of the enhanced layer, and

wherein the reverse blending processing is performed within a window range in which the image data has been subjected to blending processing, using image data on the enhanced layer.

9. The reception method according to claim 8,

wherein at least the image data on each picture of the base layer includes blending processing information, and obtaining display image data includes performing the reverse blending processing, within the range of a predetermined window, on the image data on each picture of the base layer, based on the blending processing information.

10. The reception method according to claim 9,
wherein the blending processing information includes position information regarding the image range including the moving portion.

11. The reception method according to claim 10,
wherein the blending processing information includes blending ratio information regarding the image range including the moving portion.

12. The reception method according to any one of claims 7 to 11,
wherein the predetermined frame rate includes 120 Hz.


**Patentansprüche**

1. Empfangsvorrichtung (200), die umfasst:

einen Empfangsabschnitt (202A, 202B), der dafür konfiguriert ist, Bilddaten über jedes Bild einer Basisschicht und Bilddaten über jedes Bild einer erweiterten Schicht zu empfangen; und
einen Verarbeitungsabschnitt (205A), der dafür konfiguriert ist, in Abhängigkeit von einer Anzeigefähigkeit **un**ter Verwendung nur der Bilddaten über jedes Bild der **Ba**sisschicht oder sowohl der Bilddaten über jedes Bild der Basisschicht als auch der Bilddaten über jedes Bild der erweiterten Schicht Anzeigebilddaten zu erhalten, **dadurch gekennzeichnet, dass**
die Bilddaten über jedes Bild der Basisschicht in einem Bildbereich, der einen Bewegungsanteil enthält, Bilddaten, die durch Mischen von Bilddaten über eines von zwei zeitbasiert aufeinanderfolgenden Bildern in Bilddaten mit einer vorgegebenen Bildfrequenz mit Bilddaten über das andere der zwei zeitbasiert aufeinanderfolgenden Bilder erhalten werden, enthalten und die Bilddaten über jedes Bild der Basisschicht außerhalb des Bildbereichs Bilddaten, die durch Extrahieren der Bilddaten über das eine der zwei zeitbasiert aufeinanderfolgenden Bilder erhalten werden, enthalten, die Bilddaten über jedes Bild der erweiterten Schicht Bilddaten, die durch Extrahieren der Bilddaten über das andere der zwei zeitbasiert aufeinanderfolgenden Bilder erhalten werden, enthalten, und der Bewegungsanteil gleich oder größer einem Schwellenwert ist und auf der Grundlage von Bilddaten über jedes Bild der Bilddaten bei der vorgegebenen Bildfrequenz, die den Bilddaten über jedes Bild der Basisschicht entsprechen, extrahiert wird.

2. Empfangsvorrichtung (200) nach Anspruch 1,

wobei der Verarbeitungsabschnitt (205A) dafür konfiguriert ist, in dem Bildbereich an den Bilddaten über jedes Bild der Basisschicht eine umgekehrte Mischungsverarbeitung auszuführen, falls der Verarbeitungsabschnitt die Anzeigebilddaten sowohl unter Verwendung der Bilddaten über jedes Bild der Basisschicht als auch der Bilddaten über jedes Bild der erweiterten Schicht erhält, wobei die umgekehrte Mischungsverarbeitung in einem Fensterbereich, in dem die Bilddaten der Mischungsverarbeitung ausgesetzt worden sind, unter Verwendung von Bilddaten über die erweiterte Schicht ausgeführt wird.

3. Empfangsvorrichtung (200) nach Anspruch 2,

wobei mindestens die Bilddaten über jedes Bild der Basisschicht Mischungsverarbeitungsinformationen enthalten, und der Verarbeitungsabschnitt (205A) dafür konfiguriert ist, die umgekehrte Mischungsverarbeitung in dem Bereich eines vorgegebenen Fensters an den Bilddaten über jedes Bild der Basisschicht auf der Grundlage der Mischungsverarbeitungsinformationen auszuführen.

4. Empfangsvorrichtung (200) nach Anspruch 3, wobei die Mischungsverarbeitungsinformationen Positionsinformationen hinsichtlich des Bildbereichs, der den Bewegungsanteil enthält, enthalten.

5. Empfangsvorrichtung (200) nach Anspruch 4, wobei die Mischungsverarbeitungsinformationen Mischungsverhältnisinformationen hinsichtlich des Bildbereichs, der den Bewegungsanteil enthält, enthalten.

6. Empfangsvorrichtung (200) nach einem der Ansprüche 1 bis 5, wobei die Empfangsvorrichtung ein Fernsehempfänger (200), der einen Bildschirm (207B) umfasst, ist.

7. Empfangsverfahren, das umfasst:

Empfangen von Bilddaten über jedes Bild einer Basisschicht und Bilddaten über jedes Bild einer erweiterten Schicht; und Erhalten von Anzeigebilddaten in Abhängigkeit von einer Anzeigefähigkeit unter Verwendung nur der Bilddaten über jedes Bild der Basisschicht oder sowohl der Bilddaten über jedes Bild der Basisschicht als auch der Bilddaten über jedes Bild der erweiterten Schicht, **dadurch gekennzeichnet, dass** die Bilddaten über jedes Bild der Basisschicht in einem Bildbereich, der einen Bewegungsanteil enthält, Bilddaten, die durch Mischen von Bilddaten über eines von zwei zeitbasiert aufeinanderfolgenden Bildern in Bilddaten mit einer vorgegebenen Bildfrequenz mit Bilddaten über das andere der zwei zeitbasiert aufeinanderfolgenden Bilder erhalten werden, enthalten und die Bilddaten über jedes Bild der Basisschicht außerhalb des Bildbereichs Bilddaten, die durch Extrahieren der Bilddaten über das eine der zwei zeitbasiert aufeinanderfolgenden Bilder erhalten werden, enthalten, die Bilddaten über jedes Bild der erweiterten Schicht Bilddaten, die durch Extrahieren der Bilddaten über das andere der zwei zeitbasiert aufeinanderfolgenden Bilder erhalten werden, enthalten, und der Bewegungsanteil gleich oder größer einem Schwellenwert ist und auf der Grundlage von Bilddaten über jedes Bild der Bilddaten bei der vorgegebenen Bildfrequenz, die den Bilddaten über jedes Bild der Basisschicht entsprechen, extrahiert wird.

8. Empfangsverfahren nach Anspruch 7,

wobei das Erhalten von Anzeigebilddaten das Ausführen einer umgekehrten Mischungsverarbeitung in dem Bildbereich an den Bilddaten über jedes Bild der Basisschicht, falls die Anzeigebilddaten sowohl unter Verwendung der Bilddaten über jedes Bild der Basisschicht als auch der Bilddaten über jedes Bild der erweiterten Schicht erhalten werden, enthält, und

wobei die umgekehrte Mischungsverarbeitung in einem Fensterbereich, in dem die Bilddaten der Mischungsverarbeitung ausgesetzt worden sind, unter Verwendung von Bilddaten über die erweiterte Schicht ausgeführt wird.

**9.** Empfangsverfahren nach Anspruch 8,

wobei mindestens die Bilddaten über jedes Bild der Basisschicht Mischungsverarbeitungsinformationen enthalten,
und
das Erhalten von Anzeigebilddaten das Ausführen der umgekehrten Mischungsverarbeitung in dem Bereich eines vorgegebenen Fensters an den Bilddaten über jedes Bild der Basisschicht auf der Grundlage der Mischungsverarbeitungsinformationen enthält.

**10.** Empfangsverfahren nach Anspruch 9,
wobei die Mischungsverarbeitungsinformationen Positionsinformationen hinsichtlich des Bildbereichs, der den Bewegungsanteil enthält, enthalten.

**11.** Empfangsverfahren nach Anspruch 10,
wobei die Mischungsverarbeitungsinformationen Mischungsverhältnisinformationen hinsichtlich des Bildbereichs, der den Bewegungsanteil enthält, enthalten.

**12.** Empfangsverfahren nach einem der Ansprüche 7 bis 11,
wobei die vorgegebene Bildfrequenz 120 Hz enthält.

**Revendications**

**1.** Dispositif de réception (200) comprenant :

une section de réception (202A, 202B) configurée pour recevoir des données d'image sur chaque image d'une couche de base et des données d'image sur chaque image d'une couche améliorée ; et
une section de traitement (205A) configurée pour obtenir des données d'image d'affichage en utilisant, en fonction d'une capacité d'affichage, uniquement les données d'image sur chaque image de la couche de base ou à la fois les données d'image sur chaque image de la couche de base et les données d'image sur chaque image de la couche améliorée, **caractérisé par**
les données d'image sur chaque image de la couche de base incluent, dans une plage de l'image incluant une partie en mouvement, des données d'image obtenues en mélangeant des données d'image sur l'une de deux images consécutives dans le temps dans des données d'image à une fréquence de trame prédéterminée avec des données d'image sur l'autre des deux images consécutives dans le temps, et en dehors de la plage de l'image, les données d'image sur chaque image de la couche de base incluent des données d'image obtenues en extrayant les données d'image sur l'une des deux images consécutives dans le temps,
les données d'image sur chaque image de la couche améliorée incluent des données d'image obtenues en extrayant les données d'image sur l'autre des deux images consécutives dans le temps, et
la partie en mouvement est égale ou supérieure à un seuil et est extraite sur la base des données d'image sur chaque image des données d'image à la fréquence de trame prédéterminée correspondant aux données d'image sur chaque image de la couche de base.

**2.** Dispositif de réception (200) selon la revendication 1,

dans lequel la section de traitement (205A) est configurée pour effectuer un traitement de mélange inverse, dans la plage de l'image, sur les données d'image sur chaque image de la couche de base dans le cas où la section de traitement obtient les données d'image d'affichage en utilisant à la fois les données d'image sur chaque image de la couche de base et les données d'image sur chaque image de la couche améliorée,
dans lequel le traitement de mélange inverse est effectué dans une plage de fenêtre dans laquelle les données d'image ont été soumises à un traitement de mélange, en utilisant des données d'image sur la couche améliorée.

3. Dispositif de réception (200) selon la revendication 2,

dans lequel au moins les données d'image sur chaque image de la couche de base incluent des informations de traitement de mélange, et
la section de traitement (205A) est configurée pour effectuer le traitement de mélange inverse, dans la plage d'une fenêtre prédéterminée, sur les données d'image sur chaque image de la couche de base, sur la base des informations de traitement de mélange.

4. Dispositif de réception (200) selon la revendication 3,
dans lequel les informations de traitement de mélange incluent des informations de position concernant la plage de l'image incluant la partie en mouvement.

5. Dispositif de réception (200) selon la revendication 4,
dans lequel les informations de traitement de mélange incluent des informations sur le rapport de mélange concernant la plage de l'image incluant la partie en mouvement.

6. Dispositif de réception (200) selon l'une quelconque des revendications 1 à 5,
dans lequel le dispositif de réception est un récepteur de télévision (200) comprenant un panneau d'affichage (207B).

7. Procédé de réception comprenant :

la réception de données d'image sur chaque image d'une couche de base et de données d'image sur chaque image d'une couche améliorée ; et
l'obtention de données d'image d'affichage en utilisant, en fonction d'une capacité d'affichage, uniquement les données d'image sur chaque image de la couche de base ou à la fois les données d'image sur chaque image de la couche de base et les données d'image sur chaque image de la couche améliorée, **caractérisé par**
les données d'image sur chaque image de la couche de base incluent, dans une plage de l'image incluant une partie en mouvement, des données d'image obtenues en mélangeant des données d'image sur l'une de deux images consécutives dans le temps dans des données d'image à une fréquence de trame prédéterminée avec des données d'image sur l'autre des deux images consécutives dans le temps, et en dehors de la plage de l'image, les données d'image sur chaque image de la couche de base incluent des données d'image obtenues en extrayant les données d'image sur l'une des deux images consécutives dans le temps,
les données d'image sur chaque image de la couche améliorée incluent des données d'image obtenues en extrayant les données d'image sur l'autre des deux images consécutives dans le temps, et
la partie en mouvement est égale ou supérieure à un seuil et est extraite sur la base des données d'image sur chaque image des données d'image à la fréquence de trame prédéterminée correspondant aux données d'image sur chaque image de la couche de base.

8. Procédé de réception selon la revendication 7,

dans lequel l'obtention de données d'image d'affichage inclut l'exécution d'un traitement de mélange inverse, dans la plage de l'image, sur les données d'image sur chaque image de la couche de base dans le cas où les données d'image d'affichage sont obtenues en utilisant à la fois les données d'image sur chaque image de la couche de base et les données d'image sur chaque image de la couche améliorée, et
dans lequel le traitement de mélange inverse est effectué dans une plage de fenêtre dans laquelle les données d'image ont été soumises à un traitement de mélange, en utilisant des données d'image sur la couche améliorée.

9. Procédé de réception selon la revendication 8,

dans lequel au moins les données d'image sur chaque image de la couche de base incluent des informations de traitement de mélange, et
l'obtention de données d'image d'affichage inclut l'exécution du traitement de mélange inverse, dans la plage d'une fenêtre prédéterminée, sur les données d'image sur chaque image de la couche de base, sur la base des informations de traitement de mélange.

10. Procédé de réception selon la revendication 9,

dans lequel les informations de traitement de mélange incluent des informations de position concernant la plage de l'image incluant la partie en mouvement.

11. Procédé de réception selon la revendication 10,
dans lequel les informations de traitement de mélange incluent des informations sur le rapport de mélange concernant la plage de l'image incluant la partie en mouvement.

12. Procédé de réception selon l'une quelconque des revendications 7 à 11,
dans lequel la fréquence de trame prédéterminée est de 120 Hz.

# FIG.1

10

# FIG.2

120 Hz VIDEO

: UNBLENDED : BLENDED

(a)

ENHANCED LAYER
(+60Hz)

BASE LAYER
(60Hz)

Picture-pair

(b)

ENHANCED LAYER
(+60Hz)

BASE LAYER
(60Hz)

Picture-pair

# FIG.3

10

EP 3 843 417 B1

# FIG.4

CONTROL SECTION

MOVING PIXEL NUMBER THRESHOLD

WINDOW INFORMATION (POSITION, BLENDING RATIO)

BLENDING PARAMETER

WINDOW PROCESSING SECTION — 122

60 Hz LEVEL IMAGE

P (120 Hz IMAGE)

TIME BASE DIVISION SECTION — 121

120 Hz LEVEL IMAGE

BLENDING PROCESSING SECTION — 123

R(N) (60 Hz LEVEL)

R(N+1) (120 Hz LEVEL)

102

# F I G . 5

MOVING PIXEL NUMBER THRESHOLD

122

60 Hz LEVEL IMAGE

MOTION VECTOR OF EACH PIXEL BLOCK

BIDIRECTIONAL MOTION ESTIMATION SECTION

131

SPEED DETERMINATION SECTION

132

GROUPING CANDIDATE

WINDOW GENERATION SECTION

133

WINDOW POSITION

MV (i, j) OF EACH PIXEL BLOCK

BLENDING RATIO SETTING SECTION

134

WINDOW BLENDING RATIO

# FIG.6

(a)

N-TH PICTURE
(60 Hz LEVEL IMAGE)

(b)

(N+2)-TH PICTURE
(60 Hz LEVEL IMAGE)

(c)

COMPOSITE
IMAGE

# F I G . 7

PIXEL BLOCK

Window 2

Window 1

Window 3

FIG.8

(a)

(b)

(c)

COMBINING LIST

BLK POSITION WITH SYMBOL "1" (COLUMN, ROW) | HORIZONTAL ADJACENT CANDIDATE COMBINING | VERTICAL ADJACENT CANDIDATE COMBINING

(0,4)
(0,5)
(0,6)
(1,0)
(1,3)
(1,6)
(1,7)
(2,0)
(2,1)
(2,2)
(2,3)
(2,6)
(2,7)

Window 1

Window 2

# FIG.9

BLENDING RATIO SETTING TABLE

| MOTION AMOUNT M | CONTRAST C | | |
|---|---|---|---|
| | Level 1 (SMALL) | Level 2 (MEDIUM) | Level 3 (LARGE) |
| Level 1 (SMALL) | 1 | 2 | 3 |
| Level 2 (MEDIUM) | 2 | 3 | 4, 3(#) |
| Level 3 (LARGE) | 3 | 4、3(#) | 5, 3(#) |

5 (STRONG), 4 (RELATIVELY STRONG), 3 (MODERATE), 2 (RELATIVELY WEAK), 1 (WEAK)

# FIG.10

START ～ST1

CALCULATE MV BETWEEN PICTURE PAIR (N-TH PICTURE AND (N+2)-TH PICTURE), THAT IS, FROM N-TH PICTURE TO (N+2)-TH PICTURE, TO OBTAIN FORWARD WINDOW GROUPING CANDIDATE. ～ST2

CALCULATE MV BETWEEN PICTURE PAIR (N-TH PICTURE AND (N+2)-TH PICTURE), THAT IS, FROM (N+2)-TH PICTURE TO N-TH PICTURE, TO OBTAIN BACKWARD WINDOW GROUPING CANDIDATE. ～ST3

PERFORM HORIZONTAL AND VERTICAL COMBINING PROCESSING ON GROUPING CANDIDATE, DETERMINE, AS WINDOW, RECTANGULAR REGION INCLUDING PREDETERMINED NUMBER OF GROUPING CANDIDATES THAT HAVE BEEN PUT INTO GROUP, AND OUTPUT POSITION INFORMATION REGARDING WINDOW. ～ST4

OBTAIN INFORMATION REGARDING MOTION AMOUNT M AND CONTRAST C OF MOVING OBJECT FOR EACH WINDOW, SET BLENDING RATIO ON BASIS OF INFORMATION, AND OUTPUT BLENDING RATIO INFORMATION. ～ST5

END ～ST6

# FIG.11

START — ST11

OBTAIN MOTION VECTOR MV (i, j) OF TARGET PIXEL BLOCK IN N-TH PICTURE BETWEEN PICTURE PAIR (N-TH PICTURE AND (N+2)-TH PICTURE). — ST12

ST13
IS MV (i, j) EQUAL TO OR LARGER THAN MOVING PIXEL NUMBER THRESHOLD?

no

yes

DETERMINE PIXEL BLOCK AS WINDOW GROUPING CANDIDATE. — ST14

END — ST15

# FIG.12

Blending_window_information syntax

| Syntax | No. of Bits | Format |
|---|---|---|
| blending_window_information ( ) { |  |  |
| blending_window_information_id |  | ue(v) |
| number_of_blending_windows | 8 | uimsbf |
| current_picture_position | 1 | uimsbf |
| blend_flag | 1 | bslbf |
| reserved | 6 | bslbf |
| for( I = 0 ; I < number_of_blending_windows; I++){ |  |  |
| window_start_position_horizontal | 16 | uimsbf |
| window_start_position_vertical | 16 | uimsbf |
| window_end_position_horizontal | 16 | uimsbf |
| window_end_position_vertical | 16 | uimsbf |
| blend_coefficient_A | 8 | uimsbf |
| blend_coefficient_B | 8 | uimsbf |
| } |  |  |
| } |  |  |

# FIG.13

Blending Window information SEI SEMANTICS

| | |
|---|---|
| number_of_blending_windows | INDICATE NUMBER OF windows SUBJECTED TO BLENDING PROCESSING. |
| blend_flag | FLAG INDICATING WHETHER OR NOT PICTURE HAS BEEN BLENDED.<br>1: PICTURE HAS BEEN BLENDED.    0: PICTURE HAS NOT BEEN BLENDED. |
| current_picture_position | INDICATE CHRONOLOGICAL ORDER OF CURRENT PICTURE OF<br>TWO PICTURES CONTRIBUTING TO BLENDING PROCESSING.<br>(PAST IN TERMS OF TIME) $\leftarrow$  x    x  $\rightarrow$  (FUTURE IN TERMS OF TIME)<br>       1   (ONE OF TWO PICTURES THAT COMES FIRST IN CHRONOLOGICAL ORDER: VALUE IS "1")<br>        1  (ONE OF TWO PICTURES THAT COMES SECOND IN CHRONOLOGICAL ORDER: VALUE IS "0") |
| window_start_position_horizontal | INDICATE HORIZONTAL PIXEL POSITION OF START POSITION<br>OF Window BY PIXEL-BY-PIXEL OFFSET FROM top-left OF IMAGE. |
| window_start_position_vertical | INDICATE VERTICAL PIXEL POSITION OF START POSITION OF<br>Window BY PIXEL-BY-PIXEL OFFSET FROM top-left OF IMAGE. |
| window_end_position_horizontal | INDICATE HORIZONTAL PIXEL POSITION OF END POSITION OF<br>Window BY PIXEL-BY-PIXEL OFFSET FROM top-left OF IMAGE. |
| window_end_position_vertical | INDICATE VERTICAL PIXEL POSITION OF END POSITION OF<br>Window BY PIXEL-BY-PIXEL OFFSET FROM top-left OF IMAGE. |
| blend_coefficient_A | INDICATE NUMERATOR OF COEFFICIENT IN<br>BLENDING CALCULATION PERFORMED ON PICTURE. |
| blend_coefficient_B | INDICATE DENOMINATOR OF COEFFICIENT IN<br>BLENDING CALCULATION PERFORMED ON PICTURE.<br>NOTE THAT BLENDING RATIO FOR PICTURE OTHER THAN TARGET PICTURE<br>SUBJECTED TO BLENDING CALCULATION IS REGARDED AS (1-A/B).<br>PREDETERMINED INVERSELY TRANSFORMED COEFFICIENT IS USED IN<br>INVERSE BLENDING CALCULATION. |

# F I G . 1 4

F I G . 1 5

# FIG.16

CASE WHERE BLENDING PROCESSING INFORMATION IS ADDED ONLY TO PICTURE AT 60 Hz LEVEL

# F I G . 1 7

CASE WHERE BLENDING PROCESSING INFORMATION IS ADDED TO ALL PICTURES

Transport Stream

PMT

Program_loop

video ES1 loop

Stream_type = 0x24
Elementary PID (PID1)

hevc_descriptor

video ES2 loop

Stream_type = 0x25
Elementary PID (PID2)

hevc_descriptor

PID1: video PES1

PES_payload    base layer (= subbitstream)

AUD    VPS    SPS    PPS

PSEI    SLICE    SSEI    EOS

— Blending_window_
information

PID2: video PES2

PES_payload    enhanced layer (= subset)

AUD    PPS

PSEI    SLICE    SSEI

— Blending_window_
information

EP 3 843 417 B1

# FIG.18

200A

EP 3 843 417 B1

| 202A | 203A | 204A | 205A | 206A | 207A |
|---|---|---|---|---|---|
| RECEPTION SECTION | DEMULTIPLEXER | DECODER | POSTPROCESSOR | MCFI | PANEL DISPLAY SECTION |

TS → STb,STe → R(N), R(N+1) → P →

CONTROL SECTION

201A

# FIG.19

200B

202B
RECEPTION SECTION

TS

203B
DEMULTIPLEXER

STb

204B
DECODER

R(N)

206B
MCFI

207B
PANEL DISPLAY SECTION

CONTROL SECTION

201B

FIG.20

10A

100 200-1 200-2

| TRANSMISSION DEVICE | TS ⟹ | STB | HDMI | Display |

# FIG.21

<u>10A</u>

# FIG.22

HDMI Blending_window InfoFrame format

| address | elements | | | | | | | | |
|---|---|---|---|---|---|---|---|---|---|
| Info Frame Type  Code | New InfoFrame Type | | | | | | | | |
| Info Frame  Version Number | Version = 0x01 | | | | | | | | |
| Length of blending_window InfoFrame | Length  of blending window | | | | | | | | |
| N+0 | number_of_blending_windows | | | | | | | | |
| N+1 | cpp | blend flag | | | | | | | |
| N+2 | window_start_position_horizontal (MSB) | | | | | | | | |
| N+3 | window_start_position_horizontal (LSB) | | | | | | | | |
| N+4 | window_start_position_vertical (MSB) | | | | | | | | |
| N+5 | window_start_position_vertical (LSB) | | | | | | | | |
| N+6 | window_end_position_horizontal (MSB) | | | | | | | | |
| N+7 | window_end_position_horizontal (LSB) | | | | | | | | |
| N+8 | window_end_position_vertical (MSB) | | | | | | | | |
| N+9 | window_end_position_vertical (LSB) | | | | | | | | |
| N+10 | blend_coefficient_A | | | | | | | | |
| N+11 | blend_coefficient_B | | | | | | | | |
| N+12 | | | | | | | | | |
| | | | | | | | | | |

cpp: current_picture_position
ELEMENTS IN N+2 TO N+11 ARE REPEATED IN N+12 AND FOLLOWING DATA BYTES
ON BASIS OF VALUE OF "number_of_blending_windows.

EP 3 843 417 B1

# FIG.23

10B

100B: TRANSMISSION DEVICE

TS →

300-1: IFB

HDMI

300-2: IMAGE DISPLAY DEVICE

# FIG.24

# FIG.25

312

CONTROL SECTION

WINDOW INFORMATION (POSITION, BLENDING RATIO)

MOVING PIXEL NUMBER THRESHOLD

BLENDING PARAMETER

WINDOW PROCESSING SECTION

122

60 Hz LEVEL IMAGE

P
(120 Hz IMAGE)

TIME BASE DIVISION SECTION

121

120 Hz LEVEL IMAGE

BLENDING PROCESSING SECTION

123

R(N)
(60 Hz LEVEL)

EP 3 843 417 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015076277 A
- EP 3358849 A1